# EUROPEAN PATENT SPECIFICATION

(11) **EP 1 297 453 B1**
(45) Date of publication and mention of the grant of the patent: **21.04.2010**
(21) Application number: 01937556.7
(22) Date of filing: 18.05.2001
(51) Int. Cl.: G06Q 10/00, G06F 17/30

(54) **METHOD AND APPARATUS FOR IDENTIFYING RELATED SEARCHES IN A DATABASE SEARCH SYSTEM**
VERFAHREN UND VORRICHTUNG ZUM IDENTIFIZIEREN VERWANDTER SUCHEN IN EINEM DATENBANK-SUCHSYSTEM
PROCEDE ET DISPOSITIF POUR L'IDENTIFICATION DE RECHERCHES CONNEXES DANS UN SYSTEME D'INTERROGATION DE BASE DE DONNEES

(30) Priority: 22.05.2000 US 575894
(43) Date of publication of application: 02.04.2003
(73) Proprietor: Yahoo! Inc., Sunnyvale, CA 94089 (US)
(72) Inventor: ROREX, Phillip, G., Stevenson Ranch, CA 91381 (US); SOULANILLE, Thomas, A., Pasadena, CA 91106 (US); HAUGAARD, Bradley, R., Monrovia, CA 91016 (US)
(74) Representative: McLeish, Nicholas Alistair Maxwell
(86) International application number: PCT/US2001/016161
(87) International publication number: WO 2001/090947

(56) References cited:
- WO-A-00/16218
- WO-A-98/36366
- WO-A-99/48028
- US-A- 5 799 284
- US-A- 5 799 284
- US-A- 5 819 092
- US-A- 5 850 442
- US-A- 5 999 929
- US-A- 6 029 195
- US-A- 6 128 623
- US-A- 6 154 738
- US-B1- 6 233 575
- US-B1- 6 247 021
- US-B1- 6 253 188
- "GoTo.com announces first round of financing, totaling more than $6 million, led by draper fisher jurvetson" DIALOG GALE GROUP NE, 19 May 1998 (1998-05-19), XP002936186
- JEFFREY DEAN, MONIKA R. HENZINGER: "Finding related pages in the World Wide Web" COMPUTER NETWORKS, [Online] vol. 31, no. 11-16, 1999, pages 1467-1479, XP002310138 AMSTERDAM, NETHERLANDS Retrieved from the Internet: URL:http://citeseer.ist.psu.edu/dean99find ing.html> [retrieved on 2004-12-08]
- D.SULLIVAN: "GoTo sells Positions" SEARCH ENGINE REPORT, 3 March 1998 (1998-03-03), XP002146738
- BRIN S ET AL: "The Anatomy of a Large Scale Hypertext Web Search Engine" COMPUTER NETWORKS AND ISDN SYSTEMS, NORTH HOLLAND PUBLISHING. AMSTERDAM, NL, 14 April 1998 (1998-04-14), pages 1-20, XP002247969 ISSN: 0169-7552
- SELBERG E ET AL: "THE METACRAWLER ARCHITECTURE FOR RESOURCE AGGREGATION ON THE WEB" IEEE EXPERT, IEEE INC. NEW YORK, US, vol. 12, no. 1, 1997, pages 11-14, XP000689719 ISSN: 0885-9000

## Description

### APPENDIX / COPYRIGHT REFERENCE

A portion of the disclosure of this patent document contains material which is subject to copyright protection. The copyright owner has no objection to the facsimile reproduction by anyone of the patent document or the patent disclosure, as it appears in the U.S. Patent and Trademark Office patent file or records, but otherwise reserves all copyright rights whatsoever.

An Appendix of computer program source code is included herewith. The Appendix is hereby expressly incorporated herein by reference, and contains material which is subject to copyright protection as set forth above.

### BACKGROUND OF THE INVENTION

The present invention relates generally to a method and system for generating a search result list, for example, using an Internet-based search engine. More particularly, the present invention relates to a method and system for generating search results from a bidded search listing database (also known as a pay for performance database) and generating a list of related searches from a related search database.

Search engines are commonly used to search the information available on computer networks such as the World Wide Web to enable users to locate information of interest that is stored within the network. To use a search engine, a user or searcher typically enters one or more search terms that the search engine uses to generate a listing of information, such as web pages, that the searcher is then able to access and utilize. The information resulting from the search is commonly identified as a result of an association that is established between the information and one or more of the search terms entered by the user. Different search engines use different techniques to associate information with search terms and to identify related information. These search engines also use different techniques to provide the identified information to the user. Accordingly, the likelihood of information being found as a result of a search varies depending upon the search engine used to perform the search.

This uncertainty is of particular concern to web page operators that make information available on the World Wide Web. In this setting, there are often several web page operators or advertisers that are competing for the same group of potential views or customers. Accordingly, a web page's ability to be identified as the result of a search is often important to the success of a web page. Therefore, web page operators often seek to increase the likelihood that their web page will be seen as the result of a search.

One type of search engine that provides web page operators with a more predictable method of being seen as the result of a search is a bidded search listing of "pay for performance" arrangement where web pages are displayed based at least in part upon a monetary sum that the advertiser or web page operator has agreed to pay to the search engine operator. The web page operator agrees to pay an amount of money, commonly referred to as the bid amount, in exchange for a particular position in a set of search results that is generated in response to a user's input of a search term. A higher bid amount will result in a more prominent placement in a set of search results. Thus, a web page operator may attempt to place high bids on one or more search terms to increase the likelihood that their web page will be seen as a result of a search for that term. However, there are many similar search terms, and it is difficult for a web page operator to bid on every potentially relevant search term. Likewise, it is unlikely that a bid will be made on every search term. Accordingly, a search engine operator may not receive any revenue from searches performed using certain search terms for which there are no bids.

In addition, because the number of existing web pages is ever increasing, it is becoming more difficult for a user to find relevant search results. The difficulty of obtaining relevant search results is further increased because of the search engine's dependency on the search terms entered by the user. The search results that a user receives are directly dependent upon the search terms that the user enters. The entry of one search term may not result in relevant search results, while the entry of only a slightly different search term can result in relevant search results. Accordingly, the selection of search terms is often an important part of the search process. It would be of benefit to both the searcher and the advertisers to recommend related searches for the searcher to provide to the search engine. However, current search engines do not enable a search engine operator to provide related search terms, such as those that will produce relevant search results, to a user. A system that overcomes these deficiencies is needed.

WO-A-99/48028 describes a method of updating an Internet search engine database with the results of a user's selection of specific web page listings from the general web page listing provided by the user as a result of his initial keyword search entry. By updating the database with the selections of many different users, the database can be updated to prioritise those web listings that have been selected the most with respect to a given keyword.

US-A-5,799,284 describes a computer system that is designed to help extractors and manufacturers of products, as well as service providers, to advertise their products. Instead of searching by keyword, a client can browse predefined or client defined categories.

WO-A-00/16218 describes a system of network site searching and listing employing a server which maintains a listing database containing site listings provided by subscribers. A denominated value is paid by a subscriber as a subscription fee for the site listing. For the retrieval of information, the service can offer category search options.

### SUMMARY

A first aspect of the present invention provides a database search system according to claim 1.

A second aspect of the present invention provides a method of generating a search result list according to claim 9.

In one embodiment of the invention, a search request is received from a searcher and used to perform a search on a bidded search listing database. In the bidded search listing database there are stored search listings including web page locators and bid amounts to be paid by the operator of the listed web page. The search using the bidded search listing database produces search results which are presented to the searcher. The search request is also used to perform a search on a related search database. The related search database has been formed at least in part using contents of the bidded search listing database. The search of the related search database produces a list of related searches which are presented to the searcher.

In one embodiment, all text from all web pages referenced by the bidded search listing database is stored and used to create the inverted index. Additional indexes are used to improve the relevancy and spread of related search results obtained using the database.

The foregoing discussion of illustrative embodiments of the invention has been provided only by way of introduction. Nothing in this section should be taken as a limitation on the following claims, which define the scope of the invention.

### BRIEF DESCRIPTION OF SEVERAL VIEWS OF THE DRAWINGS

FIG. 1 is a block diagram illustrating a database search system in conjunction with a computer network;
FIG. 2 is a flow diagram illustrating a method for operating the database search system of FIG. 1;
FIG. 3 is a flow diagram illustrating a method for operating the database search system of FIG. 1;
FIG. 4 is a flow diagram illustrating in more detail a portion of the method shown in FIG. 2;
FIG. 5 is a flow diagram illustrating in more detail a portion of the method shown in FIG. 2;
FIG. 6 is a flow diagram illustrating a method for forming a related searches database; and
FIG. 7 is a flow diagram illustrating a method for removing similar page information from a database.

### DETAILED DESCRIPTION OF THE PRESENTLY PREFERRED EMBODIMENTS

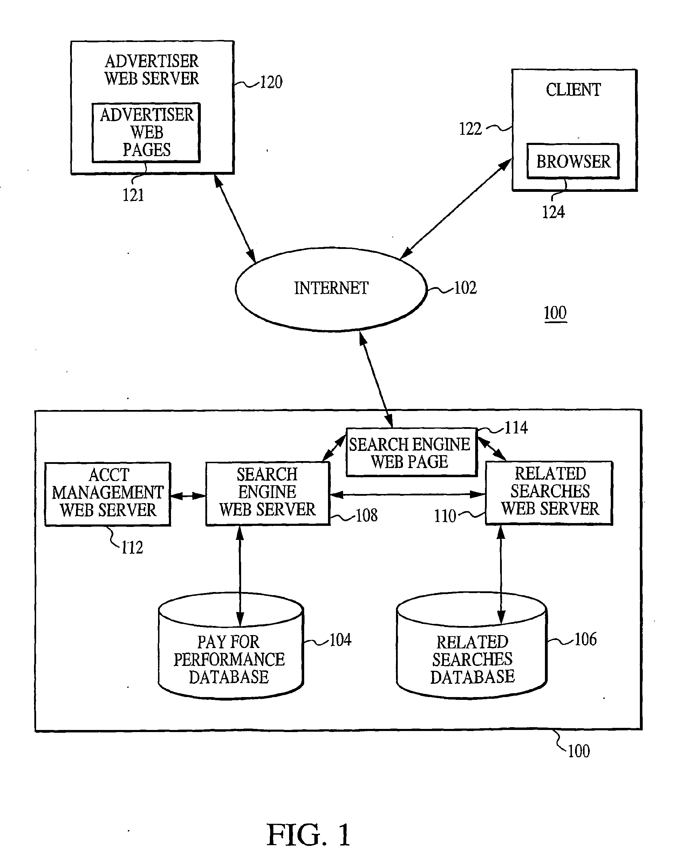

Referring now to the drawing, FIG. 1 is a block diagram of a database search system 100 shown in conjunction with a computer network 102.

The database search system 100 includes a bidded search listing database 104, a related searches database 106, a search engine web server 108, a related searches web server 110 and a search engine web page 114. The servers 104, 106, 108 may be accessed over the network 102 by an advertiser web server 120 or a client computer 122.

The network 102 in the illustrated embodiment is the Internet and provides data communication according to appropriate standards, such as Internet Protocol. In other embodiments, other network systems may be used alone or in conjunction with the Internet. Communication in the network 102 is preferably according to Internet Protocol or similar data communication standard. Other data communications standards may be used as well to ensure reliable communication of data.

The database search system 100 is configured as part of a client and server architecture. In the context of a computer network such as the Internet, a client is a process such as a program, task or application that requests a service which is provided by another process such as a program, task or application that requests a service which is provided by another process, known as a server program. The client process uses the requested service without having to know any working details about the other server program or the server itself. In networked systems, a client process usually runs on a computer that accesses shared network resources provided by another computer running a corresponding server process. A server is typically a remote computer system that is accessible over a communications medium such as a network. The server acts as an information provider for a computer network. Thus, the system 100 operates as a server for access by the clients such as client computer 122 and the advertiser web server 120.

The client computers 122 can be conventional personal computers, workstations or computer systems of any size. Each client computer 112 typically includes one or more processors, memory, input and output devices and a network interface such as a modem. The advertiser web server 120, the search engine web server 108, the related searches web server 110 and the account management web server 112 can be similarly configured. However, the advertiser web server 120, the search engine web server 108, the related searches web server 110 and the account management web server 112 may each include many computers connected by a separate private network.

The client computer 112 executes a World Wide Web ("web") browser program 124. Examples of such a program are Navigator, available from Netscape Communications Corporation and Internet Explorer, available from Microsoft Corporation. The browser program 124 is used by a user to enter addresses of specific web pages to be retrieved. These addresses are referred to as Uniform Resource Locators (URLs). In addition, once a page has been retrieved, the browser program 124 can provide access to other pages or records when the user clicks on hyperlinks to other web pages contained in the web page. Such hyperlinks provide an automated way for the user to enter the URL of another page and to retrieve that page. The pages can be data records including as content plain textual information or more complex digitally encoded multimedia content such as software programs, graphics, audio data, video data and so forth.

Client computers 122 communicate through the network 102 with various network information providers. These information providers include the advertiser web server 120, the account management server 112, the search engine server 108, and the related searches web server 110. Preferably, communication functionality is provided by HyperText Transfer Protocol (HTTP), although other communication protocols such as FTP, SNMP, Telnet and a number of other protocols known in the art may be used. Preferably, search engine server 108, related searches server 110 and account management server 112, along with advertiser servers 120 are located on the worldwide web.

The account management web server 112 in the illustrated embodiment includes a computer storage medium such as a disc system and a processing system. A database is stored on the storage medium and contains advertiser account information. Conventional browser programs 124, running on client computers 122, may be used to access advertiser account information stored on the account management server 112.

The search engine web server 108 permits network users, upon navigating to the search engine web server URL or sites on other web servers capable of submitting queries to the search engine web server 108 through a browser program 124, to type keyword queries to identify pages of interest among the millions of Pages available on web pages. In one embodiment of the present invention, the search engine web server 108 generates a search result list that includes, at least in part, relevant entries obtained from and formatted by the results of the bidding process conducted by the account management server 112. The search engine web server 108 generates a list of HyperText links to documents that contain information relevant to search terms entered by the user at a client computer 122. The search engine web server transmits this list, in the form of a web page 114 to the network user, where it is displayed on the browser 124 running on the client computer 122. One embodiment of the search engine web server may be found by navigating to the web page at URL http://www.goto.com/.

Search engine web server 108 is connected to the network 102. In one embodiment of the present invention, search engine web server 108 includes a bidded search listing database including a plurality of search listings. The database 104 contains an ordered collection of search listing records used to generate search results in response to user queries. Each search listing record contains the URL of an associated web page or document, a title, descriptive text and a bid amount. In addition, search engine web server 108 may also be connected to the account management server 112. The account management server 112 may also be connected to the network 102.

In addition, in the illustrated embodiment of FIG. 1, the database system 100 further includes a related searches web server 110 and an associated related searches database 106. The related searches web server 110 and data base 106 operate to provide suggested, related searches for presentation to a searcher along with search results in response to his query. Users conducting searches for information using a search engine web server such as the server 108 often perform searches which are inappropriately focused as compared to the index data of the web site search engine. Users may use search terms which are either too vague and generalized, such as "music," or too specific and focused, such as "hot jazz from New Orleans during the early 1950s." Some users require assistance to refine their query to better obtain useful information from the search engine. The related searches web server 110 provides the user with query suggestions better suited to the abilities of the bidded search listing database 104.

In the illustrated embodiment, the bidded search listing database 104 is established in conjunction with advertisers who operate web servers such as advertiser web server 120. Advertiser web pages 121 are displayed on the advertiser web server 120. An advertiser or web site promoter may, through an account residing on the account management server 112, participate in a competitive bidding process with other advertisers. An advertiser may bid on any number of search terms relevant to the content of the advertisers web site.

The bids submitted by the web site promoters are used to control presentation of search results to a searcher using client computer 122. Higher bids receive more advantageous placement on a search result list generated by the search engine web server 108 when a search using the search term bid on by the advertiser is executed. In one embodiment, the amount bid by an advertiser comprises a money amount that is deducted from the account of the advertiser each time the advertiser web site is accessed via a hyperlink on the search result list page. A searcher clicks on the hyperlink with a computer input device such as a mouse to initiate a retrieval request to retrieve the information associated with the advertiser's hyperlink. Preferably, each access or click on a search result list hyperlink is redirected to the search engine web server 108 to associate the click with the account identifier for an advertiser. This redirection action, which is not apparent to the searcher, will access account information coded into the search result page before accessing the advertiser's URL using the search result list hyperlink clicked on by the searcher. In the illustrated embodiment, the advertiser's web site description and hyperlink on the search result list page is accompanied by an indication that the advertiser's listing is a paid listing. Each paid listing displays an amount corresponding to a price per click paid by the advertiser for each of referral to the advertiser site through this search result list.

The searcher may click on HyperText links associated with each listing in that search result page to access the corresponding web pages. The HyperText links may access web pages anywhere on the Internet, and include paid listings to advertiser web pages 121 located on the advertiser web server 120. In one embodiment of the present invention, the search result list also includes non-paid listings that are not priced as a result of advertiser's bids and are generated by a conventional search engine, such as the Inktomi, Lycos, or Yahoo! search engines. The non-paid HyperText links may also include links manually indexed into the bidded search listing database 104 by an editorial team. Preferably, the non-paid listings follow the paid advertiser listings on the search results page.

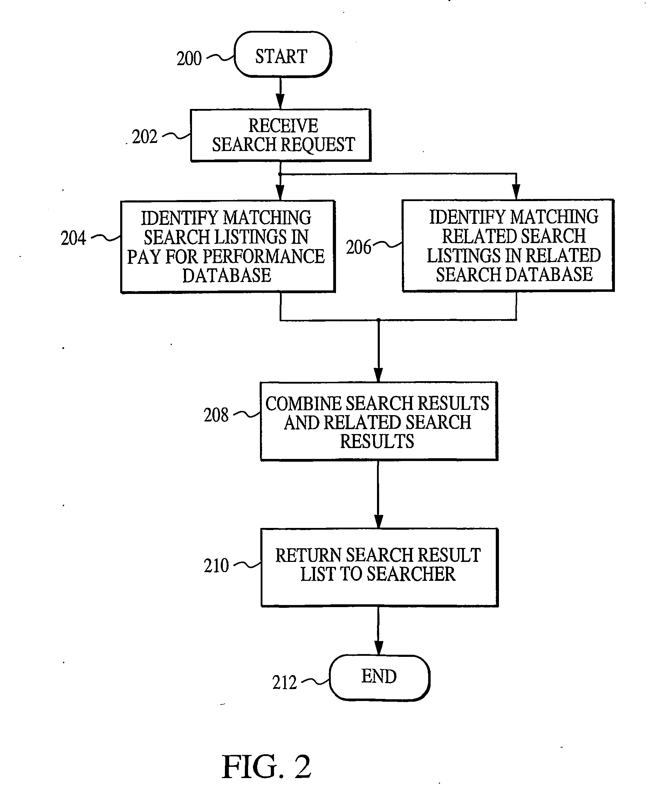

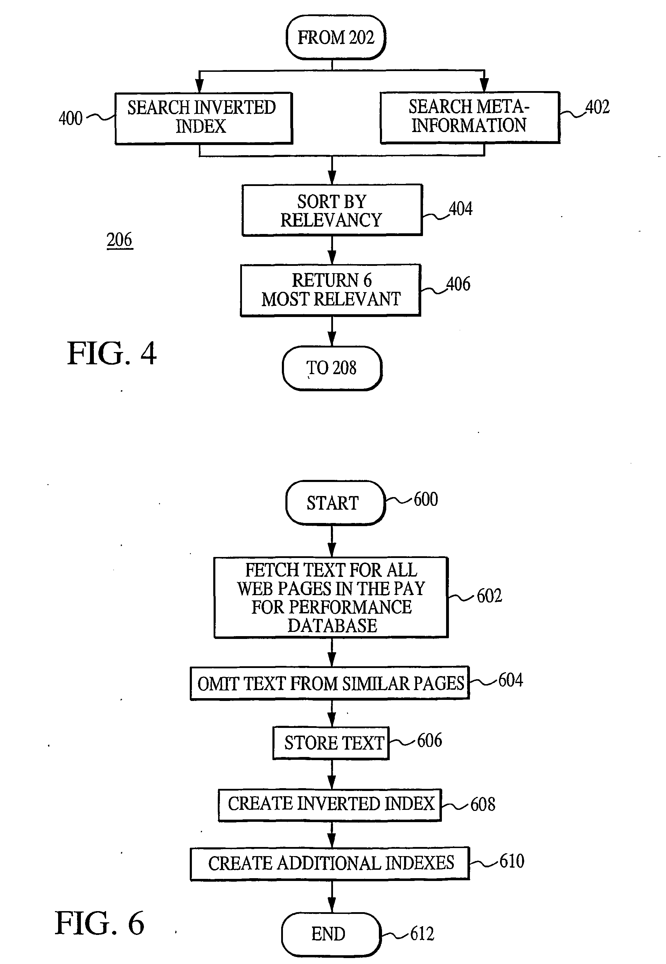

Related searches web server 110 receives the search request from the searcher at client computer 122 as entered using the search engine web page 114. In the related searches database 106, which includes related search listings generated from the bidded search listing database 104, the related searches web server 110 identifies related search listings relevant to the search request. In conjunction with the search engine web server 108, the related searches web server 110 returns a search result list to the searcher including the identified search listings located in the bidded search listing database and one or more identified related search listings located in the related searches database 106. Operation of the related searches web server 110 in conjunction with the related searches database 106 will be described below in conjunction with FIGS. 2-5. The formation of the related searches database 106 will be described below in conjunction with FIG. 6.

FIG. 2 is a flow diagram illustrating a method for operating the database search system 100 of FIG. 1. The method begins at block 200. Java source code for implementing the method of FIG. 2 and other method steps described herein is included as an appendix.

At block 202, a search request is received. The search request may be received in any suitable manner. It is envisioned that a search request will originate with a searcher using a client computer to access the search engine web page of the database system implementing the method illustrated in FIG. 2. A search request may be typed in as input text in a hyperlink click to initiate the search request and search process.

After block 202, two parallel processes are initiated. At block 204, the search engine web server of the database search system identifies matching search listings in the bidded search listing database of the system. In addition, the search engine web server may further identify non-paid search listings.

Similarly, at block 206, a related searches web server initiates a search to identify matching related search listings in the related search database. By matching search listings, it is meant that the respective search engine identifies search listings contained in the respective database which generate a match with the search request. A match may be generated if an exact, letter for letter textual match occurs between a bid on keyword and a search term. In other embodiments, a match may be generated if a bidded keyword has a predetermined relationship with a search term. For example, the predetermined relationship may include matching the root of a word which has been stripped of suffixes; in a multiple word query, matching several but not all of the words; or locating the multiple words of the query with a predetermined number of words of proximity.

After the search results have been located, the search results from the bidded search listing database are combined with search results from the related search database, block 208. At block 210, a search result list is returned to the searcher, for example by displaying identified search listings on the search engine web page and conveying the web page data over the network to the client computer. The search results and related search results may be displayed in any convenient fashion.

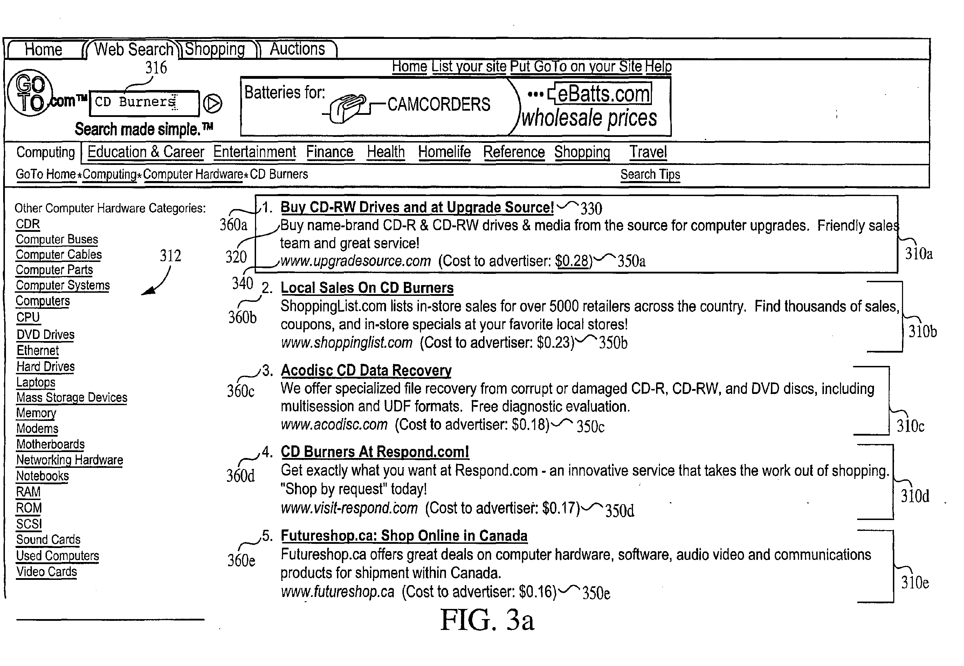

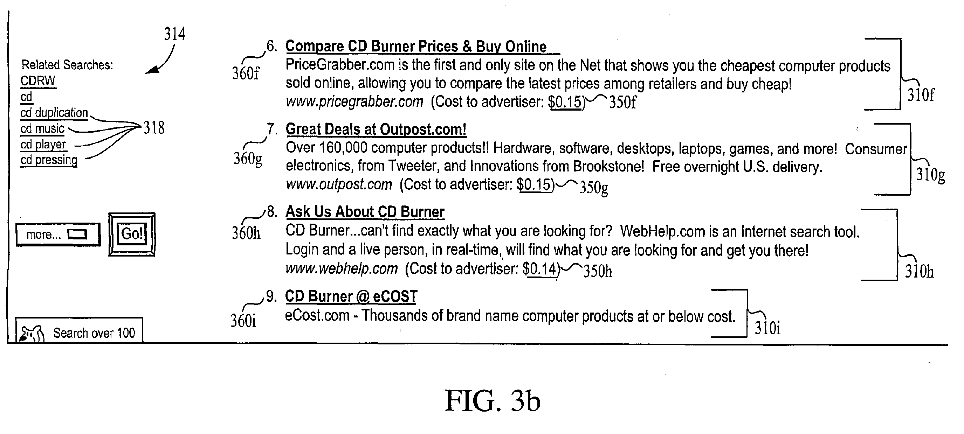

An example of a search result list display used in one embodiment of the present invention is shown in FIG. 3, which is a display of the first several entries resulting from the search for the term "CD burners." The exemplary display of FIG. 3 shows a portion of a search result list including a plurality of entries 310a, 310b, 310c,310d, 310e, 310f, 310g, 310h, 310i, a listing 312 of other search categories and a related searches listing 314.

As shown in FIG. 3, a single entry, such as entry 310a in the search result list consists of a description 320 of the web site, preferably comprising a title and a short textual description, and a hyperlink 330 which, when clicked by a searcher, directs the searcher browser to the URL where the described web site is located. The URL 340 may also be displayed in the search result list entry 310a, as shown in FIG. 3. The "click through" of a search result item occurs when the remote searches viewing the search result item display 310 of FIG. 3 selects or clicks on the hyperlink 330 of the search result item display 310.

Search result list entries 310a-310h may also show the rank value 360a, 360b, 360c, 360d, 360e, 360f, 360g, 360h, 360i of the advertisers' search listing. The rank value 360a-360i is an ordinal value, preferably a number, generated and assigned to the search listing by the processing system of the search engine web server. Preferably, the rank value 360a-360i is assigned in a process, implemented in software, that establishes an association between the bid amount, the rank, and the search term of a search listing. The process gathers all search listings that match a particular search term, sorts the search listings in order from highest to lowest bid amount, and assigns a rank value to each search listing in order. The highest bid amount receives the highest rank value, the next highest bid amount receives the next highest rank value, proceeding to the lowest bid amount, which receives the lowest rank value. The correlation between rank value and bid amount is illustrated in FIG. 3, where each of the paid search list entries 310a-310h display the advertiser's bid amount 350a, 3506, 350c, 350d, 350e, 350f, 350g, 350h, 350i for that entry. If two search listings having the same search term also have the same bid amount, the bid that was received earlier in tube will be assigned the higher rank of value.

The search result list of FIG. 3 does not include unpaid listings. In the preferred embodiment, unpaid listings do not display a bid amount and are displayed following the lowest ranked paid listing. Unpaid listings are generated by a search engine utilizing object distributed database and text searching algorithms as known in the art. An example of such a search engine is the search engine operated by Inktomi Corporation. The original search query entered by the remote searcher is used to generate unpaid listings through the conventional search engine.

The listing 312 of other search categories shows other possible categories for searching that may be related to the searcher' input search term 316. The other search categories are selected for display by identifying a group such as computer hardware containing the input search term 316. Categories with in the group are then displayed as hyperlinks which may be clicked through by the searcher for additional searches. This enhances the user's convenience in cases where the user's input search did not turn up suitable search results.

The related searches listing 314 displays six entries 318 of related searches determined using the related searches database as described herein. In other embodiments, other numbers of related search entries may be show. In addition, a link 320 labeled "more" allows the user to display additional related search entries. In the illustrated embodiment, the displayed entries 318 are the top six most relevant and most bidded-on terms in the related searches database.

Referring now to FIG. 4, the act of identifying matching related search listings in a related search database (act 206, FIG. 2) in one embodiment comprises the following acts. At block 400, an inverted index containing all data from all web pages contained in the bidded search listing database of the database search system is searched. The inverted index is stored in the related searches database. In an inverted index, a single index entry is used to reference many database records. Searching for multiple matches per index entry is generally faster when using inverted indexes, since each index entry may reference many database records. The inverted index lists the words which can be searched in, for example, alphabetical order and accompanying each word are pointers which identify the particular documents which contain the word as well as the locations within each document at which the word occurs. To perform a search, instead of searching through the documents in word order, the computer locates the pointers for the particular words identified in a search query and processes them. The computer identifies the documents which have the required order and proximity relationship for the search query terms.

At block 402, meta-information is also searched for the received search term. Meta-information is abstracted, once-removed information about the collected data itself and forms a description of the data. Meta-information is derived information and relational information. Meta-information for a listing describes the relation of the listing to other listings, and meta-information for a listing describes the relation of the advertisers sponsoring a listing to other advertisers.

Meta-information is obtained using a script of command to analyze the bidded search listing database and determine information and relationships present in the data. The meta-information is collected for each row of data in the database and attached to that row. In one embodiment, the script is run one time as a batch process after the data is collected in the database. In other embodiments, the script is periodically re-run to update the meta-information.

Meta-information about the web pages and key words contained in the bidded search listing database includes information such as the frequency of occurrence of similar key words among different web site domains and the number of different key words associated with a single web site. The meta-information may further include fielded advertiser data which is the information contained in each search listing provided by web site promoters who have bid upon search terms in the bidded search listing database; advertiser identification information; web site themes, such as gambling or adult content; and derived themes. Preferably, the meta-information is combined in a common inverted index with the stored web page data searched at block 400.

The result of the searches of block 400 and block 402 is a listing of rows of the inverted index or indexes containing the searched information. Each row contains the information associated with a search listing of the bidded search listing database along with all the text of the web page associated with the search lifting. In the illustrated embodiment, the search listing includes the advertiser's search terms, the URL of the web page, a title and descriptive text.

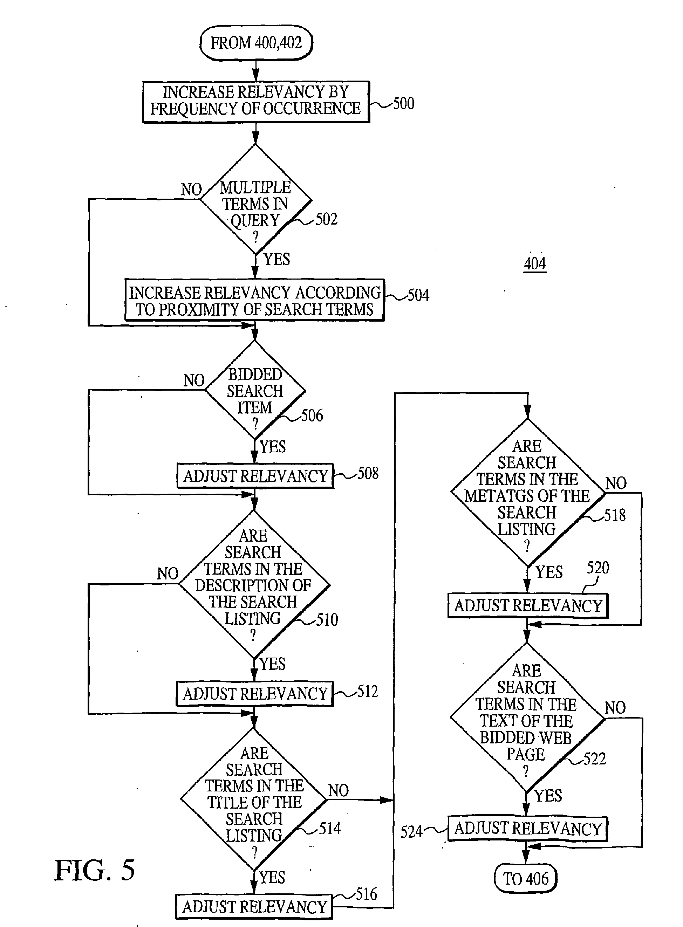

At block 404, the returned related search results are sorted by relevancy. Any suitable sorting routine may be used. A preferred process of sorting the search results by relevancy, block 404, is illustrated in greater detail in FIG. 5.

At block 406, the six most relevant related search results are selected. It is to be noted that any suitable number of search results may be provided. The choice of providing six related searches as suggestions to a searcher is arbitrary. After block 406, control proceeds at block 208, FIG. 2.

FIG. 5 is a flow diagram illustrating a method for sorting by relevancy search results obtained from a related searches database, corresponding to block 404 of FIG. 4. In the embodiment illustrated in FIG. 5, a relevancy value is maintained for each returned listing. The relevancy value is adjusted according to specific relevancy factors, some of which are defined in FIG. 5. Other relevancy factors may be used as well. After adjusting the relevancy value, a final sorting occurs and the highest valued listings are returned.

At block 500, the relevancy value for individual records located during the search (block 400, block 402, FIG. 4) are increased according to the frequency of occurrence of a queried search term in each respective record. For example, if the queried search term occurs frequently in the text associated with the search listing, the relevancy of that listing is increased. If the queried search term occurs rarely or not at all in the listing, the relevancy value of that list is not increased or is decreased.

At block 502, it is determined if there are multiple search terms in the search queries submitted by the searcher. If not, control proceeds to block 506. If there are multiple search terms, at block 504, the relevancy of individual search results is increased according to proximity of the searched terms in a located record. Thus, if two search terms are immediately proximate, the relevancy score value for the record may be substantially increased, suggesting that the identified search listing is highly relevant to the search query submitted by the searcher. On the other hand, if the two search terms occur, for example, in the same sentence but not in close proximity, the relevancy of the record may be slightly increased to indicate the lesser relevancy suggested by the reduced proximity of the search terms.

At block 506, it is determined if the located record contains a bidded search term. Search terms are bidded on by advertisers, the bids being used for display of search results by the search engine web server using the bidded search listing database. If the search result does include a bidded on search term, the relevancy of the record is adjusted, block 508. If the query does not include one or more bidded on search terms, control proceeds to block 510.

At block 510, it is determined if there are search terms in the description of the search listing. As illustrated in FIG. 3, each such listing includes a textural description of the contents of the web site associated with the search listing. If the search terms are not included in the description, control proceeds to block 514. If the search terms are included in the description, at block 512, the relevancy of the located record is adjusted accordingly.

At block 514, it is determined if the search terms are located in the title of the search listing. As illustrated in FIG. 3, each search listing includes a title 360. If the search terms are included in the title of a record, the relevancy of the record is adjusted accordingly, block 516. If the search terms are not included in the title, control proceeds to block 518.

At block 518, it is determined if the search terms are included in the metatags of the search listing. Metatags are textural information included in a web site which is not displayed for user use. However, the search listing contained in the bidded search listing database includes the metatags for searching and other purposes. If, at block 518, the search terms are not included in the search listing, control proceeds to block 522. On the other hand, if the search terms are included in one or more metatags of the search listing, at block 520 the relevancy of the record is adjusted accordingly.

At block 522 it is determined if the user's search terms are included in the text of the bidded web page. If not, control proceeds to block 406, FIG. 4. However, if the search terms are included in the web page text, at block 524 the relevancy of the search listing record is adjusted accordingly.

Following the steps illustrated in FIG. 5, one or more and preferably six most relevant related search listings are returned and presented to the searcher along with the search results from the bidded search listing database.

FIG. 6 illustrates a method for forming a related searches database for use in the database search system of FIG. 1. The method begins at block 600.

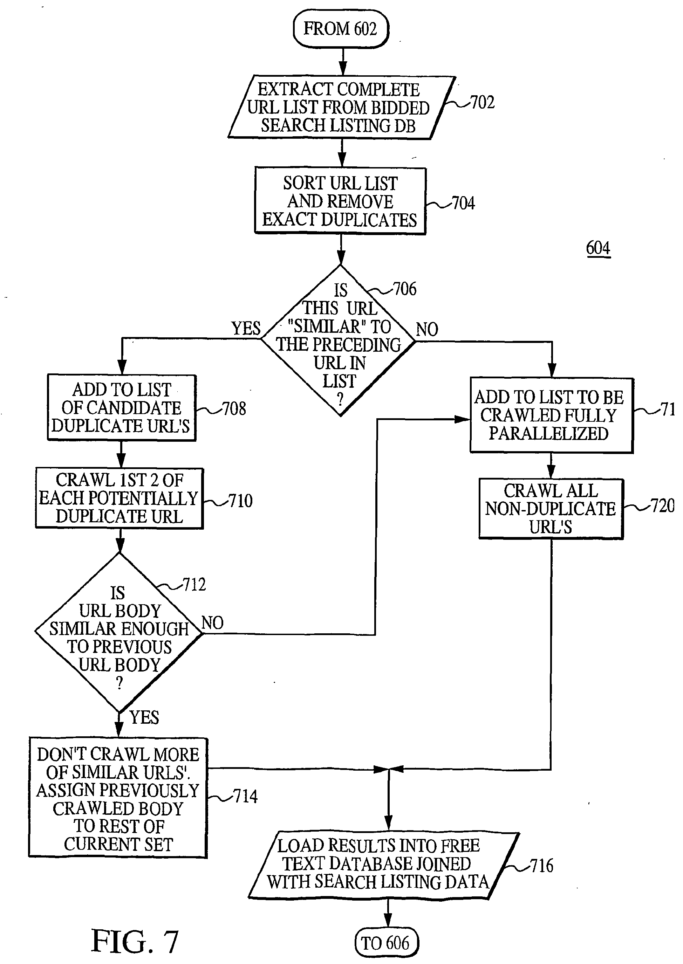

At block 602, all text for all web pages in the bidded search listing database is fetched. This includes metatags and other non-displayed textual information contained in the web page referenced by a URL contained in the bidded search listing database. At block 604, text from similar pages is omitted. This reduces the amount of data which must be processed to form the related searches database. One embodiment of a method for performing this act will be described below in conjunction with FIG. 7. In addition, this greatly increases the speed at which the related searches database may be produced. At block 606, the text is stored in the related searches database.

At block 608, an inverted index is created, indexing the search listing data stored at block 606 along with the text fetched at block 602. The resulting inserted index includes a plurality of rows of data, each row including a key word along with all text from the database associated with that key word.

One illustrative example of a configuration for the contents of the related search database follows. Each row of the database includes the following elements:

| | | |
|---|---|---|
| canon_cnt | integer | # Number of different search listings bidded on this related result |
| advertiser_cnt | integer | # Number of different advertisers bidding on this related result |
| related_result | varchar(50) | # related result (bidded search term), canonicalized and depluralized |
| raw_search_text | varchar(50) | # original raw bidded search term |
| advertiser_ids | varchar(4096) | #explicit list of all advertisers bidding on this related result |
| words | varchar(65536+) | # full text of all web pages crawled, including hand-coded descriptions |
| theme | varchar(50) | |
| directory_taxonomy | varchar(200) | |

The count canon_cnt differs from the count advertiser_cnt because many different web pages in the same domain could be bidded against the same bidded search term, or many different advertisers may bid on only 1 search term. Special themed keys are embedded into the database with 'flags' inserted in the advertiser_cnt field. If'advertiser_cnt == 999999999', the query being presented is an adult-oriented query. In this implementation, an optional enhancement is to disable related results in this case. The counts canon_cnt and advertiser_cnt are the current derived-data fields. Additional fields such as theme and directory_taxonomy_category can optionally be added to give even more enhanced relevance to related results matches, though they are not used in the illustrated embodiment.

In one embodiment, the inverted index which is queried against to obtain the related results is created with the following Java command:

```
 SQL> Create metamorph inverted index mm_index02 on line_ad02(words);
     This is the vendor-specific method (using the Texis relational database
```

management system provide by Thunderstone- EPI, Inc.) for creating a free-text search index (mm_index02) on a document (here contained in a database column (words)) which will be searched (from RelatedSearcherCore.java) by the Texis Thunderstone SQL command:

```
      "SELECT"
      + "$rank, " //Num getRow() arg position 0
      + "canon_cnt, " //Int getRow() arg position 1
     + "raw_search_text, " //Stri getRow() arg position 2
     + "cannon_search_text, " //Stri getRow() arg position 3
       + "advertiser_ids, " //Stri getRow() arg position 4
       + "advertiser_cnt " //Int getRow() arg position 5
       + "FROM line_ad02 "
      + "WHERE words "
      + "LIKEP $query ORDER BY 1 desc, advertiser_cnt desc;";
```

The $rank is a vendor-supplied virtual data field which programmatically contains the "relevancy" of the search result, based on the frequency of occurrence of the queried phrase ($query) in the "words" field, the proximity of the queried phrase elements to each other within the indexed words field, and the word order (if> 1 query phrase word) as compared to the ordering of words within the "words" field.

The "rank" is vendor-specific, and derived by various differing algorithms by different Free Text Search Engine suppliers, though is similar enough in practice that any vendor's Free Text Search Engine works to implement the Related Searches Functionality.

The "ORDER BY 1 desc[ending], advertiser_cnt desc[ending]" controls ranking the results of the query by relevance primarily (field "1" == $rank), and secondarily by the derived field "advertiser_cnt", which is the count of advertisers bidding on this particular related_search_result. Thus, "relevance" is the primary selection criteria, and "popularity" is the secondary selection criteria.

At block 610, additional indexes are created and stored with the inverted index created at block 608. The additional indexes are created using key information associated with each search listing. The key information includes, for example, fielded advertiser data such as an advertiser's identification and derived themes such as gambling and so forth. The method then ends at block 612.

FIG. 7 is a flow diagram illustrating a method for removing similar page information from a database. The method in the illustrated implementation follows performance of act 602 of FIG. 6.

At block 702, the bidded search listing database is examined for URL data and all URLs are extracted from the database and formed into a list. The list is sorted and any exact duplicates are removed, block 704

At block 706, a URL in the list is selected and it is determined if the selected URL bears similarity to a preceding URL in the list. Similarity may be determined by any suitable method, such as a number of identical characters or fields within the URL or a percentage of identical characters, or a common root or string or field.

At block 708, if the selected URL is similar to the preceding URL, the selected URL is added to a list of candidate duplicate URLs. At block 710, a predetermined number of each potentially duplicate URL are crawled. In the illustrated embodiment, the predetermined number is the first two potentially duplicate URLs. Crawling is preferably accomplished using a program code referred to as a crawler. A crawler is a program that visits Web sites and reads their pages and other information. Such programs are will known and are also known as a "spiders" or "bots." Entire sites or specific pages can be selectively visited and indexed by a crawler. In alternative embodiments, subsets of each site referenced by a URL, rather than an entire site, may be crawled and compared for similarity.

At block 712, the data returned by the crawler is examined. The data may be referred to as the body of the URL and includes data from the site identifed by the URL and all accessible pages of the site. It is determined if the data including text and other information contained in the body of the URL is sufficiently similar to the data contained in the body of the previous URL. Again, similarity may be determined by any suitable method, such as a statistical comparison of the textual content of each page. If there is sufficient similarity, control proceeds to block 714 and it is assumed that the URL is the same as the previous URL. The body of text and other information is assigned to the rest of the similar URLs.

If, at block 706, it was determined that the selected URL was not similar to the preceding URL, or if at block 712 it was determined that the body of the URL was not similar enough to the body of the previous URL, control proceeds to block 718. At block 718, the URL is added to a list of URLs to be crawled. At block 720, all URL on the list are crawled to retrieve and store information contained at the sites indicated by each URL.

At block 716, the information from each crawled URL is loaded into the related searches database (also referred to as the free text database). The information is joined with search listing data already included in the related searches database. Thus, the method steps illustrated in FIG. 7 reduce the total amounts of data contained in the related searches database by reducing the number of URLs that are crawled and stored. Duplicate URLs are eliminated from the process and near-duplicate URLs are checked for similarity of content. The result is reduced storage requirements for the resulting database and faster, more efficient searching on the database. This enhances user convenience by improving performance.

From the foregoing, it can be seen that the present invention provides an improved method and apparatus for producing related searches for presentation to a searcher searching in a bidded search listing database. Related searches are performed in a related searches database which has been formed using the bidded search listing database. The search results from the related searcher's database are ordered by relevancy for presentation to the user. Thus, if a user's initial search was too narrow or too broad, the user has available related searches which may be used to produce more usable results. In addition, the related searches have been produced using search listings referenced by bidded search terms. This provides a benefit to advertisers who pay for advertising in the database search system. This increases the likelihood that an advertiser's web site will be visited by a searcher using the database system.

### Source Code Appendix

This is the core Java piece that actually performs the Free-text-search from the Free Text Search engine (Texis RDBMS from Thunderstone - EPI, Inc.), and post-processes the results, filtering on advertiser frequency of occurrence and theme ('adult'-ness).

```
 package com.go2.search.related;

 import java.util.Vector;
 import.java.util.Hashtable;
 import java.util.StringTokenizer;
 import java.rmi.RemoteException;

 import com.go2.texis.*;

 /**
 * @author Phil Rorex
 * @version
 */

 class Callback implements TErrorMsgIF {
  private static int err115 = 0;
  public int getErr115() {
 return(err115);
  }
  public void ErrorMsgDelivery(String msg, int level, int
 msgNumber) {
 switch (msgNumber){
 case 2: {
  System.out.println("FATAL: msg: " + msg + " level: " + level + "
 msgNumber: " + msgNumber);
  System.exit(2);
 }
 case 100: break;
 case 115: err115++; break;
 default:
            System.out.println("UNUSUAL: msg: " + msg + " level: " +
 level + " msgNumber: " + msgNumber);
 }
  }
 }

 /**
 * run as a stand-alone JVM, since the Free Text Searcher
 * being used is best connected with as a JNI-based C language
 * library interface API
 **/
 public class RelatedSearcherCore implements Runnable {
 //cache an instance of Texis server and Query
 private static Server texis = null;
 private static Query texisQuery = null;
 private static Query texisPlurQuery = null;
 private static Query texisAdultQuery = null;
 private static long timeClock;

 //used to coordinate time-outs on extra long queries
 private static final Integer PRE_QUERY = new Integer(1);
 private static final Integer MID_QUERY = new Integer(2);
 private static final Integer POST_QUERY = new Integer(3);

 private static Integer semaphore = PRE_QUERY;

 // time out process
 Thread watchDog;
 // Thread starts out waiting on eternity
 // may never be used if Core() doesn't have timeout set for it
 long globalTimeOut = 0;

 //The magic adult flag
 //If a related search free-text search returns a row
 //which has this field set, it's automatically "themed"
 //as an adult-oriented related search
 //This particular "Magic data row" is pre-loaded with
 //all the "adult-oriented" terms which are typical
 //in this theme. Same should be done for CASINO_FLAG
 IICURRENT_NEWS_FLAG, and any other theme desired.
 private static final int ADULT_FLAG = 999999999;

 //How many pluralized tries of the query
 // used to search for singular and plural
 // version of up to [square root of] MAX_PLURAL_QRY
 // terms
 private static final int MAX_PLURAL_QRY = 4;

 //Limit Texis to this many rows
 //This is the initial # of pre-filtered free-text
 //searched rows coming back from the search engine
 private static final int MAX_ROWS = 60;

 //
 //controls the 'looseness' of the post-search filter
 //that filters out related searches based on the
 //derived-data element of (#-of-different-advertisers-
 //bidding on this related search term). Set to 0 is
 //this element means "how many times we can ignore seeing
 //the identical advertiser before we start ignoring
 //related searches bid on by him" 0 is strongest reject,
 //larger numbers reject less stringently (usu. not > than
 //1, if ratio of webpages:related searchterms is > than
 //about 10
 private static final int ADVERTISER_THRESHOLD = 0;

 //the SQL query used to talk to Texis (the FTS engine)
 - private static final String TEXIS_SQL =
  "SELECT "
    + "$rank, " //Num getRow() arg position 0
    + "canon_cnt, " //Int getRow() arg position 1
    + "raw_search_text, " //Stri getRow() arg position 2
    + "cannon_search_text, " //Stri getRow() arg position 3
    + "advertiser_ids, " //Stri getRow() arg position 4
    + "advertiser_cnt " //Int getRow() arg position 5
    + "FROM line_ad02 "
    + "WHERE words "
    + "LIKEP ? ORDER BY 1 desc, advertiser_cnt desc;";
    11+ "LIKEP ? ;";
    //+ "LIKEP ? ORDER BY advertiser_cnt desc;";

 private static final String TEXIS_PLUR_SQL =
 "SELECT plural "
    + "FROM plurals "
    + "WHERE singular "
    + "= ? ; ";

 private static final String TEXIS_ADULT_SQL =
 "SELECT cannon_search_text "
    + "FROM adult "
    + "WHERE words "
    + "LIKE ? ;";

 private static Callback cb = new Callback();

 public void init(String texisHome, long time0ut){
 globalTimeOut = timeout;
 init(texisHome);
 }

 public void init(String texisHome){
 /**
 * Instantiate Texis connection object and perform
 * Texis query initialization
 * Called one time to setup the Related Search query.
 * Must be called before findRelate is ever called.
 * /
 //Perform Texis initialization and precache an instance
 //of Texis Server and Texis Query
 try {
                Texis texisRDBMS = new Texis();
 texis = (Server) texisRDBMS.createServer(texisHome);

 Vector n = new Vector(200);
 II Vector n = texis.getNoise();
 n.addElement("a"); n.addElement("about");
 n.addElement("after");
 n.addElement("again"); n.addElement("ago"); n.addElement("all");
 n.addElement("almost"); n.addElement("also");
 n.addElement("always");
 n.addElement("am"); n.addElement("an"); n.addElement("and");
 n.addElement ("another") ; n.addElement ("any");
 n.addElement("anybody");
 n.addElement("anyhow"); n.addElement("anyone");
 n. addElement ("anything") ;
 n. addElement ("anyway") ; n.addElement("are");
 n.addElement("as");
 n.addElement("at"); n.addElement("away"); n.addElement("be");
 n.addElement("became");
 n.addElement("because");n.addElement("been");
 n.addElement("before"); n.addElement("being");
 n.addElement("but");
 n.addElement("by"); n.addElement("came"); n.addElement("can");
 n.addElement("cannot"); n.addElement("com");
 n.addElement("come");
 n.addElement("could"); n.addElement("de"); n.addElement("del");
 n.addElement("der"); n.addElement("did"); n.addElement("do");
 n.addElement("does"); n.addElement("doing");
 n.addElement("done");
 n.addElement("down"); n.addElement("each");
 n.addElement("else");
 n.addElement("even"); n.addElement("ever");
 n.addElement("every");
 n.addElement("everyone"); n.addElement("everything");
 n.addElement("for");
 n.addElement("from"); n.addElement("front");
 n.addElement("get");
 n.addElement("getting"); n.addElement("go");
 n.addElement("goes");
 n.addElement("going"); n.addElement("gone");
 n.addElement("got");
 n.addElement("gotten"); n.addElement("had");
 n.addElement("has");
 n.addElement("have"); n.addElement("having");
 n.addElement("he");
 n.addElement("her"); n.addElement("here"); n.addElement("him");
 n.addElement("his"); n.addElement("how"); n.addElement("i");
 n.addElement("if"); n.addElement("in"); n.addElement("into");
 n.addElement("is"); n.addElement("isn't"); n.addElement("it");
 n.addElement("jpg"); n.addElement("just");
 n.addElement("last");
 n.addElement("least"); n.addElement("left");
 n.addElement("less");
 n.addElement("let"); n.addElement("like");
 n.addElement("make");
 n.addElement("many"); n.addElement("may");
 n.addElement("maybe");
 n.addElement("me"); n.addElement("mine"); n.addElement("more");
 n.addElement("most"); n.addElement("much"); n.addElement("my");
 n.addElement("myself"); n.addElement("net");
 n.addElement("never");
 n.addElement("no"); n.addElement("none"); n.addElement("not");
 n.addElement("now"); n.addElement("of"); n.addElement("off");
 n.addElement("on"); n.addElement("one"); n.addElement("onto");
 n.addElement("org"); n.addElement("our");
 n.addElement("ourselves");
 n.addElement("out"); n.addElement("over"); n.addElement("per");
 n.addElement("put");
 n.addElement("putting"); n.addElement("same");
 n.addElement("saw"); n.addElement("see"); n.addElement("seen");
 n.addElement("shall"); .addElement("she");
 n.addElement("should");
  n.addElement("so"); n.addElement("some");
 n.addElement("somebody");
  n.addElement("someone"); n.addElement("something");
 n.addElement("stand");
  n.addElement("such"); n.addElement("sure");
 n.addElement("take");
  n.addElement("than"); n.addElement("that");
 n.addElement("the");
  n.addElement("their"); n.addElement("them");
 n.addElement("then");
  n.addElement("there"); n.addElement("these");
 n.addElement("they");
  n.addElement("this"); n.addElement("those");
 n.addElement("through");
  n.addElement("till"); n.addElement("to"); n.addElement("too");
  n.addElement("two"); n.addElement("unless");
 n.addElement("until");
  n.addElement("up"); n.addElement("upon"); n:addElement("us");
  n.addElement("very"); n.addElement("was"); n.addElement("we");
  n.addElement("went"); n.addElement("were");
 n.addElement("what");
  n.addElement("what's"); n.addElement("whatever");
 n.addElement("when");
  n.addElement("where") n.addElement("whether");
 n.addElement("which");
  n.addElement("while"); n.addElement("who");
 n.addElement("whoever");
  n.addElement("whom"); n.addElement("whose");
 n.addElement("why");
  n.addElement("will"); n.addElement("with");
 n.addElement("within");
  n.addElement("without"); n.addElement("won't")
 n.addElement("would");
  n.addElement("wouldn't"); n.addElement("www");
 n.addElement("yet");
  n.addElement("you"); n.addElement("your");
  texis.setNoise(n);

  texisQuery = (Query) texis.createQuery();
  texisPlurQuery = (Query) texis.createQuery();
  texisAdultQuery = (Query) texis.createQuery();

  /*
    * Query.api()'s affect ALL queries, not just ones set on
    */
  texisQuery.setlikeprows(MAX_ROWS);
  texisQuery.allinear(0);
  texisQuery.alpostproc(0);
  texisQuery.prepSQL(TEXIS_SQL);
  texisPlurQuery.prepSQL(TEXIS_PLUR_SQL);
  texisAdultQuery.prepSQL(TEXIS_ADULT_SQL);

       TErrorMsg.RegisterMsgDelivery(cb);

  watchDog = new Thread(this);
  watchDog.setPriority(Thread.NORM_PRIORITY + 1);
  watchDog.start();
 }catch(TException te) {
 te.printStackTrace();
 throw new RuntimeException(
    "Could not initialize Texis: Failed with: " + te.getMsg() + "
 code: " + te.getErrorCode()
  );
 } catch (RemoteException re) {
         throw new RuntimeException("Unexpected RemoteException: " +
 re);
      }
 }
 /**
 * Perform a Texis related search query and package results (if
 any)
 * into an array of RelatedResults objects
 */
 public RelatedResult[] findRelated(String rawQuery, String
 canonQuery, int maxResults, int maxResultLength)
 throws Exception
 {
 try {
 return
 findRelated(rawQuery, canonQuery, maxResults, maxResultLength, 2000);
 }catch (Exception e) {
 e.printStackTrace();
 throw new Exception("overloaded findRelated"+e.getMessage());
 }
 }
 public RelatedResult[] findRelated(String rawQuery, String
 canonQuery, int maxResults, int maxResultLength, long timeOut)
 throws RelatedSearchException
 {
 //local vars
 Vector resultVector = new Vector();
 Vector thisRow = new Vector();
 RelatedResult[] results = null;
 int resultCount = 0;
 int rank = 0;
 int canonCnt = 0;
 Integer advertiser_id = null;
 int advertiserCnt = 0;
 String advertiserIds = null;
 String rawSearchText = null;
 String canonSearchText = null;
 Runtime rt = Runtime.getRuntime();
 long mem = rt.totalMemory();
 long free = rt.freeMemory();
 //System.err.println("totalMemory(): " + mem);
 //System.err.println("freeMemory(): " + free);

 try {

 if (canonQuery == null) return(null);

 Vector queryArgs = new Vector();
  String newQuery;

  if (timeout != 0){
    // get the loop out of wait() mode
    synchronized (watchDog)( {
       globalTimeOut = timeOut;
       //system.err-println(
       // System.currentTimeMillis()
       // + "-"
       // + timeClock
       // + " = "
       // + (System.currentTimeMillis() - timeClock)
       // + "Core: setting MID_QUERY");
       semaphore = MID_QUERY;
       timeClock = System.currentTimeMillis();
       // thread better be waiting on eternity
       watchDog.notify();
    }
  }

  // if no Raw Query, probably have canonicalized version only
  if (rawQuery != null) {
    // usual serving site, don't re-pluralize, just use
    // raw query;
    newQuery = stripNoiseChars(rawQuery);
  }else{
    // only have a canonQuery to work with, so make
    // a rough approximation of a raw term to include in search
    // try and generate queries to cover up to MAX_PLURAL_QRY
 possible
    // re-pluralized forms of the query
    newQuery = pluralize(stripNoiseChars(canonQuery));
  } //if

  if(newQuery == null) return null;
  if(isAdult(newQuery)) return null;

  // Set up the (stack allocated) query parameters
  queryArgs.removeAllElements();
  queryArgs.addElement(newQuery);

  //perform JNI calls here
  texisQuery.setParam(queryArgs);
  texisQuery.execSQL();

  //Iterate over the rows
  String lastCanon = rawQuery;
  Hashtable advertisers = new Hashtable(MAX_ROWS*200);.
  Hashtable used = new Hashtable(MAX_ROWS);
  Vector resultSet = texisQuery.getRows();
  //Vector resultSet = getRowsLocal();

  // make 2 passes.
  // first time de-dup on advertisers
  // second time don't dedup
  //System.out.println("got rows: " + resultSet.size());
  for(int pass = 0; pass < 2; pass++) {
       if(resultCount >= maxResults), break;
      for (int i = 0; i < resultSet.size(); i++) {
    thisRow = (Vector)resultSet.elementAt(i);
    if (thisRow.size () ==6) {
      rank = ((Number)(thisRow.elementAt(0))).intValue();

 //System.out .println (thisRow.elementAt (0) .getdass().toString());

      canonCnt = ((Integer)(thisRow.elementAt(1))).intValue();

      rawSearchText = (String)thisRow.elementAt(2);
      canonSearchText = (String)thisRow.elementAt(3);
      advertiserIds = (String)thisRow.elementAt(4);
      advertiserCnt = ((Integer)thisRow.elementAt(5)).intValue();

      //Drop out early if we detect magic ADULT_FLAG
      if(advertiserCnt == ADULT_FLAG) return null;
      if(canonCnt == ADULT_FLAG) return null;

      if (false) {
        System.out.println( "rank: "
        + rank
        + " cnt: "
        + canonCnt
        + " rst: "
        + rawSearchText
        + " cst: "
        + canonSearchText
        + " aids: "
        + advertiserIds
        + " adcnt: "
        + advertiserCnt
        );
      }
    }else{
      throw new RelatedSearchException("Texis query failed,
 protocol violation");
    }
    // De-dup the results, and also don't return a related
    // search term which canonically matches the original query
    if ((!canonSearchText.equalsIgnoreCase(rawQuery)) &&
      (!canonSearchText.equals(canonQuery)) &&
      (!rawSearchText.equalsIgnoreCase(rawQuery)) &&
      (!rawSearchText.equalsIgnoreCase(canonQuery)) &&
      (canonSearchText.length() <= maxResultLength)) {
      //System.out.println("got cst: " + canonSearchText);
      //look for this advertiser in the hash table
      //if there, increment occurrances count
      // and if above threshhold, we've seen enough
      // terms suggested by this advertiser, so go to
      // next term
      // if not seen this advertiser yet, put it in the
      // hashtable and process

      StringTokenizer st = new StringTokenizer(advertiserIds, " "
 );
      //if(st.countTokens() != advertiserCnt) {
      // System.out.println("toks:"
      // + st.countTokens()
       // + "Cnt: "
       // + advertiserCnt);
       // throw new RelatedSearchException(
       // "Texis query suspect, wrong advertiser count");
       //}
       if (pass == 0) {
         int dupAdvCnt = 0;
         boolean Next = false;
         // Parse all the advertiser ID's out of the returned row
         while(st.hasMoreTokens()){
           Integer advertiserId = Integer.valueOf(st.nextToken());
           //if (!advertisers.containsKey(advertiserId))
           // if this advertiser is new to us (over whole query)
           // put in the hash
           Integer cnt = (Integer)advertisers.get(advertiserId);
           if (cnt == null)
            {
              advertisers.put(advertiserId,new Integer(0));
            }else{
              // Seen this advertiser before, so increment his
              // tally
              advertisers.put(advertiserId,new
 Integer(cnt.intValue()+1));

              //System.out.println(advertiserId + " dups: " +
 (cnt.intValue()+1));
              // If he's (now) past the threshhold, don't use
              // bidded term (yet)
              if (cnt.intValue() >= ADVERTISER_THRESHOLD) {
                Next = true;
                break;
              }
              dupAdvCnt++;
            }
         }
         if (Next == true)( {
            continue;
         }else {
            if (!used.containsKey(canonSearchText)) {
              used.put(canonSearchText, new Boolean(true));
            }
          }
       }else {
         if (!used.containsKey(canonSearchText)) {
            used.put(canonSearchText, new Boolean(true));
          }else{
            continue;
          }
       }

       //if (dupAdvCnt >= ADVERTISER_THRESHOLD) {
          //continue;
       // System.out.println("dups: " + dupAdvCnt);
      //)
 /**
      if (pass == 0) {
         // first time thru see if we've used this advertiser
         Integer cnt = (Integer)advertisers.get(advertiser_id);
         if (cnt ==null) {
           advertisers.put(advertiser_id,new Integer(0));
         }else{
           advertisers.put(advertiser_id,new
 Integer(cnt.intValue()+1));
           if (cnt.intValue() >= ADVERTISER_THRESHOLD) {
             continue;
           }
         }
         if (!used.containsKey(canonSearchText)) {
           used.put(canonSearchText, new Boolean(true));
         }
      }else{
         // this is a second (or more) time thru.
         // see if we've already used this term
         if (!used.containsKey(canonSearchText)){ {
           used.put(canonSearchText, new Boolean(true));
         }else{
           continue;
         }
      }
 **/
      if(resultCount < maxResults){
        resultVector.
           addElement(new RelatedResult(rawSearchText,
 RelatedResult.NON_CACHED));
        resultCount++;
      }else {
        break;
      }//if-else
    }//if
      }//for
  }//for
  }catch (TException te) {
 throw new RelatedSearchException("Texis interface failed with: "
 + te.getMsg(), te);
 }catch(Throwable t) {
 t.printStackTrace();
 throw new RelatedSearchException("Unexpected Texis failure with:
 " + t.getMessage(), t);
 }finally {
 if (timeout != 0) {
    synchronized (watchDog) {
      //System.err.println(
      // System.currentTimeMillis()
      // + "_"
      // + timeClock
      // + " = "
      // + (System.currentTimeMillis() - timeClock)
      // + "Core: setting POST_QUERY");
      semaphore = POST_QUERY;
      timeClock = System.currentTimeMillis();
       // cause thread to wait on eternity
      globalTimeOut = 0;
      watchDog.notify();
       //System.err.println(
       // System.currentTimeMillis()
       // + "-"
       // + timeClock
       // + " = "
       // + (System.currentTimeMillis() - timeClock)
       // + " Core: done with calling notify");
    }
  }
 }

 //System.out.println("INFO: 115 err''s: " + cb.getErr115());
 if (cb.getErr115() > 100) {
 System.out.println("FATAL: Too many Err115's");
 System.exit(3);
 }

 if(resultVector.size() == 0)
 return null;
 else {
 resultVector.copyInto(results = new
 RelatedResult[resultVector.size()]);
 return results;
 }
 }
 private String stripNoiseChars(String term) {
 // Clean up the query a bit
 if(term.length() < 2) return(null);
 char[] buf = new char[term.length()];
 int firstChar = 0;
 term.getChars(0, but.length, buf, 0);
 for (int i = 0; i < buf.length; i++) {
    if (buf[i] < 0x20 || buf[i] > 0x7e) return(null);

    switch (buf [i]) {
    case ('~'):
    case ('`'):
    case ('!'):
    case ('@'):
    case ('#'):
    case ('$'):
    case ('%'):
    case ('^'):
    case ('&'):
    case ('*'):
    case ('('):
    case (')'):
    case ('-'):
    case ('_'):
    case ('+'):
    case ('='):
    case ('{'):
    case ('['):
    case ('}'):
    case (']'):
    case ('|'):
    case ('\"):
    case (':'):
    case (';'):
    case ('"'):
    case ('\\'):
    case ('>'):
    case (','):
    case ('<'):
    case ('.'):
    case ('/'):
    case ('?'):
    case (' '): {
      buf[i] = ' ';
      //System.out.println("i:"
      //+ i + "firstChar:" + firstChar
      //+ "setting buf[i]: "
      //+ (String.valueOf(buf[i])) + " setting to space");
      if(firstChar == i) firstChar = i+1;
    }
    }
  }
  // only spaces left
 if (firstChar == buf.length) return(null);

 term = term == null ? null :
 String.valueOf(buf, firstChar, buf.length-firstChar).trim();

    switch(term.length()){
 case 0:
 case 1: return(null);
 default: {
    switch (buf[firstChar]){
    case ('h'):
    case ('H'):
    case ('w'):
    case ('W'):{
      String lowerTerm = term.toLowerCase();

      // Use the 1case vers of the string for testing
      // but make sure to SET the original string to return
      if(lowerTerm.startsWith("http www")) term =
 term.substring(10);
      else if(lowerTerm.startsWith("http www")) term =
 term.substring(9);
      else if(lowerTerm.startsWith("http www")) term =
 term.substring(8);
      else if(lowerTerm.startsWith("hhttp www")) term =
 term.substring(11);
      else if(lowerTerm.startsWith("http ")) term =
 term.substring(5);
      else if(lowerTerm.startswith("http")) term =
 term.substring(4);
      else if(lowerTerm.startsWith("www ")) term =
 term.substring(4);
      else if (lowerTerm.startsWith("www")) term =
 term.substring(3);
      }
    }
 }
 }
 switch (term.length()){
 case 0:
 case 1: return(null);
 default: {
    switch (term.charAt (term.length()-1)){
   case ('m'):
   case ('M'):
   case ('t'):
    case ('T'):
   case ('g'):
   case ('G'):
   case ('f'):
    case ('F'):{
      String lowerTerm = term.toLowerCase();

      if(lowerTerm.endsWith(" dot com")) term = term.length() > 8 ?
 term.substring(0, term.length()-8) : null;
      else if(lowerTerm.endsWith(" dotcom")) term = term.length() >
 7 ? term.substring (0,term.length()-7) : null;
      else if(lowerTerm.endsWith(" com")) term = term.length() > 4
 ? term.substring(0,term.length()-4): null;
      else if(lowerTerm.endsWith(" net")) term = term.length() > 4
 ? term.substring(0,term.length()-4): null;
      else if(lowerTerm.endsWith(" org")) term = term.length() > 4
 ? term.substring(0,term.length()-4) : null;
      else if(lowerTerm.endsWith(" gif")) term = term.length() > 4
 ? term.substring(0,term.length()-4) null;
      else if(lowerTerm.endsWith(" jpg")) term = term.length() > 4
 ? term.substring(0,term.length()-4) : null;
      }
    }
 }
 }
 //Debug: System.out.println("term: [" + term.trim() + "]");
 return(term == null ? null : term.trim());
 }

 private boolean isAdult(String query)
 throws RelatedSearchException
 {
 if(query == null) return false;
 Vector queryArgs = new Vector();
 Vector thisRow = new Vector();
 queryArgs.addElement(query);

 try {
 //perform JNI calls
 texisAdultQuery.setParam(queryArgs);
 texisAdultQuery.execSQL();
 if((thisRow = texisAdultQuery.getRow()).size() !=0) {
    return(true);
 }else{
   return(false);
 }
 }catch (TException te) {
 throw new RelatedSearchException("Texis interface failed with: " +
 te.getMsg(), te);
 }catch (RemoteException re) {
        throw new RelatedSearchException("Got a RemoteException that
 should never occur: " + re);
         }
 }

 private String pluralize(String token)
    throws RelatedSearchException
 {
 if(token == null) return null;
 Vector queryArgs = new Vector();
 String pluralToken;
 Vector thisRow = new Vector();
 StringTokenizer st0 = new StringTokenizer(token, " " );
 String[] terms = new String[st0.countTokens()];
 String[] fullQuery = new String[MAX_PLURAL_QRY);
 int fullQueryCnt = 0;
 // Iterate over each token to see if there's a plural version
 for(int ele0 = 0; st0.hasMoreTokens(); ele0++){
    terms[ele0] = st0.nextToken();
 }

 for(int element = 0; element < terms.length && fullQueryCnt <
 MAX_PLURAL_QRY; element++) {

    // Do plurals lookup on this term from texis db
    queryArgs.removeAllElements();
    queryArgs.addElement(terms[element]);

         try {
    //perform JNI calls
    texisPlurQuery.setParam(queryArgs);
    texisPlurQuery.execSQL();

    //retrieve the row
    if((thisRow = texisPlurQuery.getRow()).size() != 0){
      String term = null;
      // loop thru the terms
      for(int ele1 = 0; ele1 < terms.length; ele1++) {
         if(ele1 == element){
             if(ele1 == 0) {
           term = (String)(thisRow.elementAt(0));
              } else {
           term += " " + (String)(thisRow.elementAt(0));
              }
         }else{
             if(ele1 ==0)
           term = terms[ele1];
             else
           term += " " + terms[ele1];
       }
     }
     fullQuery[fullQueryCnt] = term;
     fullQueryCnt++;
  }
       }catch (TException te) {
  throw new RelatedSearchException("Texis interface failed with: "
 + te.getMsg(), te);
       }catch (RemoteException re) {
                throw new RelatedSearchException("Got a
 RemoteException that should never occur: " + re);}

 }

 // Build the new expanded query
 if(fullQueryCnt > 0){
  pluralToken = "(" + token;
  for(int i = 0; i < fullQueryCnt; i++){
    pluralToken = pluralToken + "," + fullQuery[i];
  }
  pluralToken = pluralToken + ")";
 }else{
  pluralToken = token;
 }
 return(pluralToken);
  }
  public Vector getRowsLocal() throws TException, RemoteException {
       Vector set = new Vector();
       int e;
       synchronized (APIToken.Lock) {
            while (true) {
                Vector row = new Vector();
                row = texisQuery.getRow();
                if (row.size() == 0)
                     break;
                set.addElement(row);
            }
       }
       return set;
  }

  public synchronized void run() {
  while (true){
 try{
 // start our timeout
 synchronized(watchDog)( {
  //System.err.println(
  // System.currentTimeMillis()
  // + "-"
  // + timeClock
  // + " = "
  // + (System.currentTimeMillis() - timeClock)
  // + " run: starting wait of "
  // + globalTimeOut);
  watchDog.wait(globalTimeOut);
  // just got woke up,
  // see why
   if (semaphore.equals(PRE_QUERY)){
     //System.err.println(
     // System.currentTimeMillis()
     // + "-"
     // + timeClock
     // + " = "
     // + (System.currentTimeMillis() - timeClock)
     // + " run: got PRE_QUERY");
     continue;
   } else if (semaphore.equals(POST_QUERY)){
     //System.err.println(
     // System.currentTimeMillis()
     //+"-"
     // + timeClock
     // +"="
     // + (System.currentTimeMillis() - timeClock)
     // + " run: got POST_QUERY");
     continue;
   } else if (semaphore.equals(MID_QUERY)){
     if (System.currentTimeMillis() - timeClock >= globalTimeOut){
       // we timed out, but semaphore wasn't
       // set, so hose ourselves
       System.err.println(
          System.currentTimeMillis()
          + " -"
          + timeClock
          + " = "
          + (System.currentTimeMillis() - timeClock)
          + " Fatal: timeout "
          + globalTimeOut
          + " usec exceeded");
       System.exit(1);
     }else{
       //System.err.println(
       // System.currentTimeMillis()
       // + "-"
       // + timeClock
       //+"="
       // + (System.currentTimeMillis() - timeClock)
       // + " run: got MID_QUERY, but OK!");
     }
  } else {
     System.err.println(
       System.currentTimeMillis()
       + "-"
       + timeClock
       + " = "
       + (System.currentTimeMillis() - timeClock)
       + " run: ARGHH got no_QUERY, Hmmmmm !");
  }
 }
 }catch(Exception e){
  System.err.println("got wait() exception");
 }
  }
 }
 }
```

The following code is used to implement the cached results lookup, first to see if we've seen this related search before, to save time and not do the algorithmic lookup during the related search execution.

```
 package com.go2.search.related;

 //import atg.nucleus.GenericRMIService;
 import atg.nucleus.GenericService;
 import atg.nucleus.ServiceException;

 import atg.service.resourcepool.JDBCConnectionPool;
 import atg.service.resourcepool.ResourceObject;
 import atg.service.resourcepool.ResourcePoolException;

 import java.rmi.RemoteException;

 import java.net.*;
 import java.io.*;

 import java.sql.*;

 import java.util.Vector;

 /**
 * This is the top level interface to the related search
 * system it is meant to be used as a dynamo service available
 * to other dynamo services
 *
 */
 //public class RelatedSearcherImpl extends GenericRMIService
 public class RelatedSearcherImpl extends GenericService
                    implements RelatedSearcher
 {
     //my pool of Texis/UDP
    private TexisUDPConnectionPool texisUDPConnectionPool;

     //my pool of connections to Oracle cache
    private JDBCConnectionPool relatedCacheConnectionPool;

     //Statistics properties
    private int       requestCount = 0;
    private int       oracleCacheHits = 0;
    private int       texisRequests = 0;
    private int       texisTimeoutMillis = 0;
    private int       slowTexisRequestCount = 0;

    //private constants
    private static String CACHE_SQL = "SELECT * FROM REL_SEARCH
 WHERE CANON_QUERY=?";
    private static int       BUFFER_SIZE = 512;

    //parameters
    private boolean texisEnabled = false;
     private boolean oracleEnabled = false;
     private boolean systemEnabled = false;
     private long cummulativeOracleTime = 0;
     private long cummulativeTexisTime = 0;
 /**
 * Create and export and instance of RelatedSearcher over RMI
 */
 public RelatedSearcherImpl() throws RemoteException {
     super();

     // java.rmi.registry.LocateRegistry.createRegistry (1111) .rebind (
 "RelatedSearcher", this);
 }
 /**
 * This method was created in VisualAge.
 * @return RelatedResult[]
 * @param canonQuery java.lang.String
 * @param maxResults int
 * @param maxLength int
 */
 private RelatedResult[] findFromCache(String canonQuery, int
 maxResults, int maxLength)
     throws RelatedSearchException
 {
     Vector resultVector = new Vector();
     RelatedResult[] results = null;
     PreparedStatement ps = null;
     ResultSet rs = null;
     try {
            //Get a Connection
            ResourceObject resource = null;
            try {
                   resource = getRelatedCacheConnectionPool() checkout
 (getAbsoluteName ());
                   Connection conn = (Connection) resource.getResource
 ();
                   boolean success = false;
                   try {
                          //Here's where we get the goods from Oracle
                          ps = conn.prepareStatement(CACHE_SQL);
                          ps.setString(1, canonQuery);
                          rs = ps.executeQuery();
                          //prime the cursor to point to the one and
 only row we
                           //expect from Oracle if now matching rows
 were found
                           //then we'll simply drop thru to the end
                       if(rs.next()) {
                                  //Extract the data we need if there was
 something
                                  int numTerms = rs.getInt(2);
                                  if(numTerms == 0)
                                         //The cache tells us that there
 won't be
                                         //any results so we'll bail early
                                         throw new
 RelatedSearchException("No related Results");
                                  int cacheFlag = rs.getInt(3);
                                 //iterate over results retrieving upto
 maxResults
                                 //of those of them that are maxLength
 or smaller
                                 int resultCount = 0, rowCount = 0;
                                 while(resultCount < maxResults &&
 rowCount < numTerms) {
                                        String term = rs.getString(4 +
 rowcount);
                                         //push this term into the result
 vector if its good
                                        if(term.length() <= maxLength) {
                                                resultVector.addElement(new
 RelatedResult(term, cacheFlag));
                                                resultCount++;
                                         }
                                        rowCount++;
                                 }
                          }
                   conn.commit() ;
                          success = true;
                   }finally{
                          //Cleanup result set
                          if(rs != null)
                                 rs.close();
                          //Cleanup prepared statement
                          if(ps != null)
                                 ps.close();
                          //Cleanup connection
                          if (!success && conn != null) conn.rollback
 ();
                   }//try-finally
            }finally {
                   // Check the Connection back in
                   if (resource != null)
                          getRelatedCacheConnectionPool().checkIn
 (resource);
            }//try-finally
    }catch (ResourcePoolException exc) {
           if (isLoggingError ()) {
                   logError ("Unable to get Oracle cache connection",
 exc);
    }
           throw new RelatedSearchException("Unable to get Oracle
 cache connection", exc);
    }catch (SQLException se) {
           if (isLoggingError ()) {
                   logError ("Interface with Oracle cache failed",
 se) ;
           }
           throw new RelatedSearchException("Interface with Oracle
 cache failed", se);
    }//try-catch
    if(resultVector.size() == 0)
           return null;
    else {
           resultVector.copyInto(results = new
 RelatedResult[resultvector.size()]);
            return results;
     }
 }
 /**
 * Communicate to Texis thru TexisConnectionPool
 * @return RelatedResult[]
 * @param canonQuery java.lang.String
 * @param maxResults int
 * @param maxLength int
 */
 private RelatedResult[] findFromUDPTexis(String rawQuery, String
 canonQuery, int maxResults, int maxLength)
     throws RelatedSearchException
 {
     RelatedResult[] results = null;
     //Get a UDPTexisConnection
     ResourceObject resource = null;
     TexisUDPConnection tc = null;
     try {
            resource = getTexisUDPConnectionPool().checkOut
 (getAbsoluteName ());
            tc = (TexisUDPConnection) resource.getResource ();
            DatagramSocket socket = tc.getSocket();
            //do this at run time to be able to switch Dynamo at run
 time
            socket.setSoTimeout(getTexisTimeoutMillis());

            //package data to send
            TexisRequest request = new TexisRequest();
            request.setRawQuery(rawQuery);
            request.setCanonQuery(canonQuery);
            request.setMaxResults(maxResults);
            request.setMaxChars(maxLength);
            request;setSequenceNumber(++tc.sequenceNumber);
            request.setTimeout(getTexisTimeoutMillis());

            ByteArrayOutputStream baos = new ByteArrayOutputStream();
            ObjectOutputStream ous = new ObjectOutputStream(baos);
            ous.writeObject(request);
            ous.flush () ;
            baos.close();
            byte[] sendData = baos.toByteArray();
            //send it off to the server
            if(isLoggingDebug()) {
                   logDebug("About to send to Texis at endpoint: " +
 tc.getHost() + ":" + tc.getPort());
            }
            //send it
            DatagramPacket sendPacket = new DatagramPacket(sendData,
 sendData.length, tc.getHost(), tc.getPort());
            socket.send(sendPacket);

            //wait for a reply upto timeout milliseconds
            long startWait = System.currentTimeMillis();
            while (true) { //pull off inboud packets and check them
 the the right sequenceNumber
                   //throws a java.io.InterruptedIOExeption on timeout
                   DatagramPacket receivePacket = new
 DatagramPacket(new byte[BUFFER_SIZE], BUFFER_SIZE);
                   socket.receive(receivePacket);
                   ObjectInputStream ois = new ObjectInputStream(new
 ByteArrayInputStream(receivePacket.getData())) ;
                   TexisResponse response =
 (TexisResponse)ois.readObject();
                   ois.close();
                   if(response.getSequenceNumber() !=
 tc.sequenceNumber) {
                          //we got a stale response
                          long midpoint = System.currentTimeMillis();
                          int remainder = (int)(getTexisTimeoutMillis()
 - (midPoint - startWait));
                          if(remainder > 0) {//if we can still wait
 some more before a timeout
                                 //reset socket timeOut to the remaining
 time
                                 socket.setSoTimeout(remainder);
                          }else {
                                 //give up at this point
                                 break;
                          }
                   }//if-wrong-sequence-number
                   else {
                          results = response.getResults();
                          break;
                   }
            }//while

     }catch (ResourcePoolException rpe) {
            if (isLoggingError ()) {
                   logError ("Unable to get or checkin a Texis
 connection", rpe);
            }
     }catch(ClassNotFoundException cnfe) {
            if (isLoggingError ()) {
                   logError ("Class not found Exception", cnfe);
            }
     }catch(SocketException se) {
            if (isLoggingError ()) {
                   logError ("Socket Exception talking to Texis", se);
            }
     }catch(StreamCorruptedException see) {
            if (isLoggingError ()) {
                   logError ("Corrupted return from Texis", sce);
            }
     }catch(InterruptedIOException ioie) {
  if (isLoggingDebug()) {
                   logDebug("Timed out talking to Texis", ioie);
            }
     }catch(IOException ioe) {
            if (isLoggingDebug()) {
                   logDebug("Timed out talking to Texis", ioe);
            }
     }
     finally {
            // Check the Connection back in if we got it in the first
 place
            try {
                   if (resource != null)
                          getTexisUDPConnectionPool().checkIn
 (resource);
            }catch(ResourcePoolException rpe){ /* ignore this one */
 }
     }
    return results;
 }
 /**
 * @return RelatedResult[] - an array of RelatedResult objects
 * which is ordered by relebance from high to low or null if the
 system is disable or no
 * related results were found
 * @param rawQuery java.lang.String - raw query for which related
 searches are needed
 * @param canonQuery java.lang.String - canonocalized for of the raw
 query
 * @param maxResults int - maximum number of results requested
 * @param maxResultLenght int - maximum lenght of a result in
 characters
 */
 public RelatedResult[] findRelated(String rawQuery, String
 canonQuery, int maxResults, int maxResultLength)
                                                //throws
 RelatedSearchException //throws
                                                throws
 RelatedSearchException, RemoteException
 {

    requestCount++;
    //Return fast if system is disabled
    if(!getSystemEnabled())
            return null;

    RelatedResult[] results = null;

    //first try getting data from the Oracle pool (if enabled)
    if(getOracleEnabled()) {
            try {
                   long startOracle = System.currentTimeMillis();
 //keep timing stats
                   results = findFromCache(canonQuery, maxResults,
 maxResultLength);
                   oracleCacheHits++; //fixed statistics bug
                   cummulativeOracleTime +=
 (System.currentTimeMillis() - startOracle);
            }catch(RelatedSearchException rse) {
                   //If Oracle told us that this search has no related
                   //i.e. editorially-excluded porn, then drop out
 early
                   if(rse.getRootCause() == null) {
                          return null;
                   }else { //log it otherwise for post mortem
                          if(isLoggingError())
                                 logError("Failed to interface to Oracle
 cache, will try Texis", rse);
                   }
            }catch(Exception e) {
                   if(isLoggingError())
                          logError("Failed to interface to Oracle", e);
            }
    }//if Oracle enabled

    //if unsuccessfull then try Texis pool if enabled
    if(getTexisEnabled() && results == null) {
           try {
                  long startTexisQuery = System.currentTimeMillis();
 //keep texis timing stats
                   texisRequests++;
                  results = findFromUDPTexis(rawQuery, canonQuery,
 maxResults, maxResultLength);
                   long texisQueryMillis = System.currentTimeMillis()
 - startTexisQuery;
                   //log abnormally long request time
                   if(texisQueryMillis > getTexisTimeoutMillis())
                          slowTexisRequestCount++;
                  cummulativeTexisTime += texisQueryMillis;
            }catch(Exception e){
                   if (isLoggingError())
                          logError("Texis interface failed with: " +
 e.getMessage() , e);
            }
     }//if texisEnabled

    return results;
 }
 /**
 * Stats accessor
 * @return String
 */
 public String getCummulativeOracleTime() {
           return (cummulativeOracleTime / 1000.0) + " seconds";
 }
 /**
 * Stats accessor
 * @return long
 */
 public String getCummulativeTexisTime() {
    return (cummulativeTexisTime / 1000.0) + " seconds";
 }
 /**
 * Stats accessor
 * @return int
 */
 public int getOracleCacheHits() {
    return oracleCacheHits;
 }
 /**
 * Stats accessor
 * @return boolean
 */
 public boolean getOracleEnabled() {
    return oracleEnabled;
 }
 /**
 * Accessor for relatedCacheConnectionPool
 * @return atg.service.resourcepool.JDBCConnectionPool
 */
 public JDBCConnectionPool getRelatedCacheConnectionPool() {
    return relatedCacheConnectionPool;
 }
 / **
 * Stats accessor
 * @return int
 */
 public int getRequestCount() {
    return requestCount;
 }
 /**
 * Stats accessor
 * @return int
 */
 public int getSlowTexisRequestCount() {
    return slowTexisRequestCount;
 }
 /**
 * Stats accessor
 * @return boolean
 */
 public boolean getSystemEnabled() {
    return systemEnabled;
 }
 /**
 * Stats accessor
 * @return boolean
 */
 public boolean getTexisEnabled() {
    return texisEnabled;
 }
 /**
 * stats accessor
 * @return int
 */
 public int getTexisRequests() {
    return texisRequests;
 }
 /**
 * configu param accessor
 * @return int
 */
 public int getTexisTimeoutMillis() {
    return texisTimeoutMillis;
 }
 /**
 * This method was created in VisualAge.
 * @return com.go2.search.related.TexisUDPConnectionPool
 */
 public TexisUDPConnectionPool getTexisUDPConnectionPool() {
     return texisUDPConnectionPool;
 }
 /**
 * mutator
 * @param newValue boolean
 */
 public void setOracleEnabled(boolean newValue) {
     this.oracleEnabled = newValue;
 }
 /**
 * Mutator for relatedCacheConnectionPool
 * @param newValue atg.service.resourcepool:JDBcconnectionPool
 */
 public void setRelatedCacheConnectionPool(JDBCConnectionPool
 newValue) {
     this.relatedCacheConnectionPool = newValue;
 }
 /**
 * mutator
 * @param newValue boolean
 */
 public void setSystemEnabled(boolean newValue) {
     this.systemEnabled = newValue;
 }
 /**
 * mutator
 * @param newValue boolean .
 */
 public void setTexisEnabled(boolean newValue) {
     this.texisEnabled = newValue;
 }
 /**
 * parameter mutator
 * @param newValue int
 */
 public void setTexisTimeoutMillis(int newValue) {
     this.texisTimeoutMillis = newValue;
 }
 /**
 * This method was created in VisualAge.
 * @param newValue com.go2.search.related.TexisUDPConnectionPool
 */
 public void setTexisUDPConnectionPool(TexisUDPConnectionPool
 newValue) {
     this.texisUDPConnectionPool = newValue;
 }
 }
```

The following code is control code that controls the dumping of search
listing database, loading the crawled text, and inverted-indexing
all the related search indexing, including building the 'derived-data' elements:

```
 #!/bin/ksh -x
 export PATH=/usr/local/morph3/bin:.:$PATH
 #. ./.zshrc

 export TMP=/export/home/goto/tmp
 export TEMP=$TMP
 export TEMPDIR=$TMP
 export TMPDIR=$TMP

 TMPTABLE=line_ad0
 TMPTABLE2=line_ad
 TERMSTABLE=terms

 INC=02
 NEWTABLE=line_ad${INC}

 CRAWLDATA=/home/goto/rs/DONE/ALL.UNIQ
 CRAWLTABLE=line_ad4
 SPOOL=/home/goto/list

 DB=/home/goto/crawldb
 ###############
 Log(){
    echo '\n####' $(date "+%m/%d %H:%M:%S") "${*}" '####'
 }

 log 0. timport crawled data
 Log 0.1 Create line_ad4 and unique index in preparation for 'crawl'
 import

 tsq1 -d $DB << !
 drop table line_ad4;
 create table line_ad4(
 id counter,
 ad_url varchar(300),
 crawltitle varchar(750),
 crawlmeta varchar(500),
 crawlbody varchar(8000)
 );
 drop index idx4ad_url;
 create unique index idx4ad_url on line_ad4(ad url);
 !

 timport -database $DB -table $CRAWLTABLE -s
 /home/goto/rs/DONE/crawl.sch -file $CRAWLDATA
 Log 1. extract line_ads from live_ADMN into column delimited spool
 file
 umpadm $SPOOL

 Log 2. timport -database $DB -table $TMPTABLE -s newrs.sch -file
 ${SPOOL}
 timport -database $DB -table $TMPTABLE -s newrs.sch -file $(SPOOL)

 Log 3. build canon index on $TMPTABLE
 ##
 tsq1 -d $(DB) <<!
 drop index idx0cst;
 create index idx0cst on ${TMPTABLE}(cannon_search_text);
 !

 ##
 Log 4. add counts of canons to $TMPTABLE
 texis DB=$DB TMPTABLE=$TMPTABLE updatecnt

 Log 5. build url index on $TMPTABLE
 tsq1 -d $(DB) << !
 drop index idx0url;
 create index idx0ur1 on ${TMPTABLE}(ad_url);
 !

 Log 6. merge crawled text w/ original
 tsql -d $(DB) <<!
 drop index idx4ur1;
 create index idx4url on ${CRAWLTABLE}(ad_url);
 drop table $TMPTABLE2;
 CREATE TABLE $TMPTABLE2
 AS
 SELECT
 a.price prince,
 a.rating rating,
 a.ad_id ad_id,
 a.bid_date bid_date,
 a.raw_search_text raw_search_text,
 a.cannon_search_text cannon_search_text,
 a.ad_spec_title ad_spec_title,
 a.ad_spec_desc ad_spec_desc,
 a.ad_url ad_url,
 a. resource_id resource_id,
 b.crawltitle crawltitle,
 b.crawlmeta crawlmeta,
 b.crawlbody crawlbody,
 a.canon_cnt
 from $TMPTABLE a, $CRAWLTABLE b
 where a.ad_url = b.ad_url
 order by price desc;

 !

 #texis DB=$DB CRAWLTABLE=$CRAWLTABLE TMPTABLE=$TMPTABLE updateit

 Log 7. collapse 0 onto 01
 Log 7.1 first make the table
 tsql -d $(DB) <<!
 drop table $(NEWTABLE);
 !

 tsql -d ${DB) <<!
 create table ${NEWTABLE}(
 canon_cnt       integer,
 cannon_search_text   varchar(50),
 raw_search_text      varchar(50),
 advertiser_ids       varchar(4096),
 advertiser_cnt       integer,
 words                varchar(65536)
 );
 !

 Log 7.2 second, build the uniq, sorted list of search terms
 Log 7.2 select cannon_search_text from ${TMPTABLE};
 tsql -d ${DB} <<! | sort -u | timport -s termstable.sch -file -
 select cannon_search_text from ${TMPTABLE};
 !

 Log 7.3 third, build uniq index on terms table
 Log 7.3 create unique index idxterm on terms term
 tsql -d ${DB} <<!
 create unique index idxterm on terms(term);
 !

 Log 7.3.9 prepare for collapse
 Log 7.3.9 create index idxcstcol on $TMPTABLE2 cannon_search_text
 Log 7.3.9 create index idxadidcol on $TMPTABLE2 ad_id
 tsql -d $(DB) <<!
 create index idxcstcol on $TMPTABLE2 (cannon_search_text);
 create index idxadidcol on $TMPTABLE2 (ad_id);
 !
 Log 7.4 fourth collapse around csts
 Log 7.4 texis SRCTABLE=$TMPTABLE2 TGTTABLE=$NEWTABLE
 TERMSTABLE=$TERMSTABLE collapse
 texis db=$DB SRCTABLE=$TMPTABLE2 TGTTABLE=$NEWTABLE
 TERMSTABLE=$TERMSTABLE collapse

 Log 8 do the porn line
 buildporn |import -database $DB -table $NEWTABLE -s rsporn.sch -
 file -

 Log 9 do the porn table
 newporn| timport -database $DB -s rsnewporn.sch -file -

 Log 10 metamorph index words column
 tsql -d $DB << !
 create metamorph inverted index mmx${INC}w on ${NEWTABLE}(words);
 !
 Log 10 all done
 Dumps bid-for-placement search listings data

 #!/bin/ksh

 TXSORAUSER=XXXXXXX
 TXSORAPWD=XXXXXXX
 LVSRVPWD=XXXXXX
 #SPOOL=pipe
 SPOOL=${1}
 SERVER=XXXXXX

 Log ( ) {
     echo '\n####' $(date "+%m/%d %H: %M: %S"): "${1}" '####'
 }

 Log "start dump"

 sqlplus -S ${TXSORAUSER}/${TXSORAPWD}@1${SERVER} >/dev/null << !
     //set heading off
     set linesize 750
     set pagesize 0
     set arraysize 1
     set maxdata 50000
     set buffer 50000
     set crt off;
     set termout off
     spool $(SPOOL)
     select
            rpad (to_char (advertiser_id) 8) ||
            rpad(raw_search,30)||
            rpad(canon_search,30) ||
            rpad(title,100) ||
            rpad (description, 280) ||
            rpad(ur1,200) ||
            rpad(resource_id,20) ||
            rpad(to_char(price*100),5) ||
            rpad(rating,2) ||
            rpad(to_char(search_id),8) ||
            rpad(resource_id,18) ||
            rpad (to_char (line_ad_id),8) ||
            to_char(bid_date, 'YYYYMMDD HHMMSS')
     from ads
     where status = 5 and rating = 'G' and canon_search <> 'grab
 bag'
     and rownum < 10000;
     spool off;
     quit;
 !
 Log "end dump"
 exit 0
```

Counts # of occurances of pagebids for each particular potential related search result

```
 <script language=vortex>
 <timeout = -1></timeout>
 <a name=main>
 <DB = "/home/goto/crawldb">
 <SQL ROW "select distinct cannon_search_text cst from " $TMPTABLE>
 <SQL ROW "select count(*) cnt from "$TMPTABLE " where
 cannon_search_text = $cst">
 <SQL NOVARS "update " $TMPTABLE " set canon_cnt = $cnt where
 cannon_search_text = $cst" >
     </SQL>
   </SQL>
 </SQL>
 </a>
 </script>
```

Aggregates web page body-text and listings based on the related-search result, while collecting and creating derived-data of 1, how many different advertisers have web-pages associated with the related-search result.

```
 <script language=vortex>
 <timeout = -1></timeout>
 <DB = /home/goto/crawldb>
 <a name=main>
 <!-- get all canon-terms from tmp table -->

 <SQL ROW "select term cst from " $TERMSTABLE >

 <$words =>
 <$rsts =>
 <$csts =>
 <$asts =>
 <$asds =>
 <$cts =>
 <$cms =>
 <$cbs =>
 <$advs =>
 <$last_adv =>
 <$adv_cnt = 0>
 <!-- get all rows w/ this canon term from tmp table -->
 <SQL ROW
  "select canon_cnt cc, ad_id aid, raw_search_text rst,
 cannon_search_text cts, ad_spec_title ast,
   ad_spec_desc asd, crawltitle ct, crawlbody cb, crawlmeta cm
   from " $SRCTABLE " where cannon_search_text = $cst order by
 ad_id">
  <!-- aggregate the text to prepare for collapsed insert -->
  <$rsts = ( $rsts + ' ' + $rst ) >
  <$rsts = ( $csts + ' ' + $cst ) >
  <$asts = ( $asts + ' ' + $ast ) >
  <$asds = ( $asds + ' ' + $asd ) >
  <$cts = ( $cts + ' ' + $ct ) >
  <$cms = ( $cms + ' ' + $cm ) >
  <$cbs = ( $cbs + ' ' + $cb ) >

  <if $aid != $last_adv>
    <!-- add advertiser to list if not seen him before -->
    <$advs = ( $advs + ' '+$ain) > >
    <$adv_cnt = ( $adv_cnt + 1 ) >
   - <$last_adv = $aid>
  </if>
 </SQL>
 <$canon_cnt = $loop>
 <$words = ( $rsts + ' ' + $csts + ' ' + $asts + ' ' + $asds + ' ' +
 $cms + ' ' + $cbs + ' ' + $cts ) >
 <!-- pick off zeroeth element only from $rst array -->
 <loop $rst>
  <$Rst = $rst>
  <break>
 </loop>
 <strlen $words>
 <$wlen = $ret>
 <strlen $advs>
 <!-- display which row we're working on -->
 $wlen $ret $cst
 <!-- insert to collapsed row -->
 <SQL NOVARS "insert into " $TGTTABLE " (canon_cnt,
 cannon_search_text, raw_search_text, advertiser_ids, advertiser_cnt,
 words) VALUES ($cc, $cst, $Rst, $advs, $adv_cnt, $words)" ></SQL>
 <!--$words ***<$ret = (text2mm ($words, 50))> $ret -->
 </SQL>
 </a>
 </script>
```

Database schema layout used to upload bidded search listings

```
 database /home/goto/crawldb
 #droptable line_ad1
 droptable line_ad0
 table line_ad0
 createtable
 col
 #keepfirst
 trimspace
 #multiple
 datefmt yyyymmdd HHMMSS
```

| # | Name | Type | Tag |
|---|---|---|---|
| default_val | | | |
| field " " | advertiser_id | varchar(8) | 1-8 |
| field " " | raw_search_text | varchar(40) | 9-48 |
| field " " | cannon_search_text | varchar(40) | 49-88 |
| field " " | ad_spec_title | varchar(100) | 89-188 |
| field " " | ad_spec_desc | varchar(2000) | 189-2188 |
| field " " | ad_ur1 | varchar(200) | 2189-2388 |
| field " " | resource_id | varchar(20) | 2389-2408 |
| field 0 | price | integer | 2409-2413 |
| field " " | rating | char(2) | 2414-2415 |
| field 0 | ad_id | integer | 2416-2423 |
| field 0 | bid_date | date | 2424-2438 |
| field | canon_cnt integer | - | 0 |
| field " " | crawlwords | varchar(40) | - |

Manual join of search listing data with crawled web page data into a single merged table

```
 <script language=vortex>
 <timeout = -1></timeout>
 <a name=main>
 <DB = "/home/goto/crawldb">
 <SQL ROW "select ad_url myurl, crawltitle ct, crawlmeta cm, crawlbody
 cb from " $CRAWLTABLE>
 <SQL NOVARS "update " $TMPTABLE " set crawltitle = $ct, crawlmeta =
 $cm, crawlbody = $cbwhere ad_url = $myurl" >
 </SQL>
 </SQL>
 </a>
 </script>
```

Code to duplicate URL Crawl elimination

```
 /**
 * Insert the type's description here.
 * Creation date: (02/18/2000 11:12:12 AM)
 * @author:
 */
 import java.io.*; //import of java classes needed for input/output
 import java.util.*;
 // import corejava.*;
 import java.lang.String;
 public class Url {
 /*****
 * Compare URLs Address *
 *****
 */
 public static void main(String args[]) throws Exception
 {

 // Decalarations of the input and output File
    BufferedReader inputFile;
    PrintWriter nonDupFile;
    PrintWriter dupFile;

 // Initialization
    String firstUrl="";
    String secondUrl="";
    String urlBufferA, urlBufferB="", urlBufferC="";

    String compareDomainA ="";
    String compareDomainB="";
    String compareDomainC="";
    String newFlag="false";
    inputFile = new BufferedReader(new
 FileReader("/home/lauw/urls.lau"));

    nonDupFile = new PrintWriter(new
 FileWriter("/home/lauw/nonDupFile.real"));
      dupFile = new PrintWriter(new
 FileWriter("/home/lauw/dupFile.real"));

      nonDupFile.close();
      dupFile.close();

    firstUrl=inputFile.readLine ();
    secondUrl=inputFile.readLine ();
    urlBufferC=inputFile.readLine();

    urlBufferA= firstUrl;
    urlBufferB= secondUrl;

 do

 {

      Slash ccompareDomainA = new Slash();
    Slash ccompareDomainB = new Slash();
    Slash ccompareDomainC = new Slash();

    compareDomainA = ccompareDomainA.Slash(urlBufferA);
    compareDomainB = ccompareDomainB.Slash(urlBufferB);
    compareDomainC = ccompareDomainC.Slash(urlBufferC);

    Compare compareSub = new Compare();

       newFlag=compareSub.Compare(compareDomainA, compareDomainB,
 compareDomainC, urlBufferB, newFlag);
       urlBufferA=urlBufferB;
    urlBufferB=urlBufferC;
    urlBufferC=inputFile.readLine();

     }while(urlBufferC!=null);
 ///////////////////////////Loop for first Null value

    urlBufferC=firstUrl;

    Slash ccompareFirstNullDomainA = new Slash();
       Slash ccompareFirstNullDomainB = new Slash();
       Slash ccompareFirstNullDomainC = new Slash();

       compareDomainA = ccompareFirstNullDomainA.Slash(urlBufferA);
       compareDomainB = ccompareFirstNullDomainB.Slash(urlBufferB);
       compareDomainC = ccompareFirstNullDomainC.Slash(urlBufferC);

       Compare compareFirstNullSub = new Compare();

       newFlag=compareFirstNullSub.Compare(compareDomainA,
 compareDomainB, compareDomainC, urlBufferB, newFlag);
 /////////////////////////Loop for last Null value
 urlBufferA=urlBufferB;
 urlBufferB=firstUrl;
 urlBufferC=secondUrl;

    Slash ccompareLastNullDomainA = new Slash();
       Slash ccompareLastNullDomainB = new Slash();
       Slash ccompareLastNullDomainC = new Slash();

       compareDomainA = ccompareLastNullDomainA.Slash(urlBufferA);
       compareDomainB = ccompareLastNullDomainB.Slash(urlBufferB);
       compareDomainC = ccompareLastNullDomainC.Slash(urlBufferC);

       Compare compareLastNullSub = new Compare();

       newFlag=compareLastNullSub.Compare(compareDomainA,
 compareDomainB, compareDomainC, urlBufferB, newFlag);
     inputFile.close();
     }
 }
 class Slash{
 String Slash(String buffer)
 {
              int domainSlashEnd =0;
    int domainSlashStart = 0;
       boolean domainIndex = false;
       boolean startFound = false;
          boolean newFlag = false;
       String comparedomain;
       comparedomain="";

 for (int domainSlashLoop=8; domainSlashLoop <= (buffer.length()-1);
 domainSlashLoop++)
 {if
 ((buffer.substring(domainSlashLoop,(domainSlashLoop+1)).equals("/"))
 ||
 (buffer.substring(domainSlashLoop,(domainSlashLoop+1)).equals("?")))
 {
           if (startFound==false)
           {
           /// Check the Urls with Domain Name only
           if ((domainSlashLoop + 1)==buffer.length())
                   {
    comparedomain=buffer.substring(0, (buffer.length()));
                  domainIndex=true;
                  domainSlashLoop=buffer.length() + 500;
                  }//end for domain name only
           domainSlashStart = domainSlashLoop + 1;
           startFound = true;
           }
           else
           {
                  domainSlashEnd=domainSlashLoop;
                   domainSlashLoop = buffer.length() + 500; ///add 5
 to get out of the loop
           }
 }/// end for Loop
 if (domainslashEnd==0)
 {
     domainSlashEnd = buffer.length();
 }
 if (domainIndex==false)
 {
    comparedomain=buffer.substring(domainSlashStart,
 domainSlashEnd);
 }
 }
 return comparedomain;
 }
 }
 import java.io.*; //import of java classes needed for input/output
 class Compare
 {

    String Compare (String aCompareDomainA,. String aCompareDomainB,
 String aCompareDomainC, String aUrlBufferB, String newFlag) throws
 Exception
 {
    PrintWriter nonDupFile;
       PrintWriter dupFile;

    nonDupFile = new PrintWriter(new
 FileWriter ("/home/lauw/nonDupfile.real", true),true);
       dupFile = new PrintWriter(new
 FileWriter("/home/lauw/dupFile.real",true),true);
    if ( aCompareDomainC.equals(aCompareDomainB))

     {
            if (newFlag.equals("true"))
                   {
                          dupFile.println("New");
                          newFlag = "false";
                   }
            System.out.println("Duplicate");
            dupFile.println(aUrlBufferB);
     }
    else
     {
    if (aCompareDomainB.equals(aCompareDomainA))
     {
            if (newFlag.equals("true"))
                   {
                          dupFile.println("New");
                          newFlag = "false";
                   }
            System.out.println ("print a Duplicat in second time");
            System.out.println("Sec Duplicate");
            dupfile.println (aUrlBufferB);
     }
     else
     {
            System.out.println( "non Dup");
            nonDupFile.println(aUrlBufferB);
            newFlag="true";
     }
     System.out.println("***************************************");
 }

 return newFlag;

 }
 }
```

## Claims

1. A database search system (100) comprising:
a search database (104) having stored therein a plurality of search listings, each listing being associated with an advertiser, at least one keyword, a money amount to be charged to the advertiser when the listing is selected by a user from a search result list, and a Uniform Resource Locator (URL) referencing a web page;
a search engine web server (108) for receiving a search term entered by a user and for identifying search listings of the search database (104) having a keyword matching the search term, ordering the identified search listings using the money amounts for the respective identified search listings, and generating a result list including at least some of the ordered listings;
means for forming related searches listings using search listings of the search database (104) by retrieving text of the web page referenced by the URL of each search listing, the related searches listings each including one of said at least one keyword and the retrieved text;
a related searches database (106) having stored thereon said formed related searches listings, and an inverted index including a plurality of rows of data, each row including one of said at least one keyword and the retrieved text of all of the web pages associated with the keyword;
a related searches web server (110) for identifying related searches listings stored in said related searches database (106), having text matching the search term entered by the user and producing a related searches result list (314) comprising the keywords of at least some of the identified related searches listings for presentation to the user as suggested, related searches along with the result list; and
means for providing the result list and the related searches result list to the user.

2. The system of claim 1 further comprising means for recording a selection by the user of a search listing from the result list and an account identifier for charging to an account of the advertiser associated with the selected listing the money amount associated with the selected listing.

3. The system of claim 1 wherein the search engine web server (108) is operable to generate web pages for receiving the search term from the user and for presenting the result list and the related searches result list to the user.

4. The system of claim 1 wherein the related searches web server (110) is operable to sort the identified related searches listings by relevancy to the search term.

5. The system of claim 4 wherein the related searches result list (314) comprises a predetermined number of the most relevant keywords that appear most often as keywords in search listings of the search database (104).

6. The system of claim 1 wherein the related searches web server (110) is further operable to search meta-information about the web pages referenced by the search database, the meta-information being stored in the related database (106), to identify related searches listings having meta-information matching the search term entered by the user and to combine the identified related searches listings with the related searches listings having text matching the search term entered by the user.

7. A method of generating a search result list, comprising:
storing, in a search database (104), a plurality of search listings, each listing being associated with an advertiser, at least one keyword, a money amount to be charged to the advertiser when the listing is selected by a user from a search result list, and a Uniform Resource Locator (URL) referencing a web page;
forming a plurality of related searches listings using search listings of the search database (104) by retrieving text of the web page referenced by the URL of each search listing, the related searches listings each including one of said at least one keyword and the retrieved text;
storing, in a related searches database (106), said formed plurality of related searches listings and an inverted index including a plurality of rows of data, each row including one of said at least one keyword and the retrieved text of all of the web pages associated with the keyword;
receiving, at a search engine web server (108), a search term entered by a user;
identifying search listings of the search database (104) having a keyword matching the search term;
ordering the identified search listings using the money amounts for the respective identified search listings;
generating a result list including at least some of the ordered listings;
identifying, at a related searches web server (110), related searches listings stored in said related searches database (106) having text matching the search term entered by the user;
producing a related searches result list (314) comprising the keywords of at least some of the identified related searches listings as suggested, related searches; and
providing the result list and the related searches result list to the user.

8. The method of claim 7 further comprising:
recording a selection by the user of a search listing from the result list and an account identifier;
charging to an account of the advertiser associated with the selected listing the money amount associated with the selected listing.

9. The method of claim 7 further comprising generating web pages for receiving the search term from the user and for presenting the result list and the related searches result list to the user.

10. The method of claim 7 further comprising sorting the identified related searches listings by relevancy to the search term.

11. The method of claim 10 wherein the related searches result list (314) comprises a predetermined number of the most relevant keywords that appear most often as keywords in search listings of the search database (104).

12. The method of claim 7 further comprising:
searching meta-information about the web pages referenced by the search database (402), the meta-information being stored in the related database (106);
identifying related searches listings having meta-information matching the search term entered by the user; and
combining the identified related searches listings with the related searches listings having text matching the search term entered by the user.

## Patentansprüche

1. Datenbanksuchsystem (100), umfassend:
eine Suchdatenbank (104), in der eine Mehrzahl von Suchlistings gespeichert sind, wobei jedes Listing einem Werbetreibenden zugeordnet ist, wenigstens einem Schlüsselwort, einem Geldbetrag, der dem Werbetreibenden in Rechnung zu stellen ist, wenn das Listing von einem Benutzer aus einer Suchergebnisliste ausgewählt wird, und einem einheitlichen Quellenanzeiger (einer URL), der eine Webseite referenziert;
einen Suchmaschinen-Webserver (108), um einen von einem Benutzer eingegebenen Suchbegriff zu empfangen, und um Suchlistings der Suchdatenbank (104) zu identifizieren, die ein Schlüsselwort aufweisen, das dem Suchbegriff entspricht, um die identifizierten Suchlistings unter Verwendung der Geldbeträge für die jeweiligen identifizierten Suchlistings zu ordnen, und um eine Ergebnisliste zu erzeugen, die wenigstens einige der geordneten Listings umfasst;
Mittel zum Bilden von Listings verwandter Suchen unter Verwendung von Suchlistings der Suchdatenbank (104) durch Abrufen von Text der von der URL jedes Suchlistings referenzierten Webseite, wobei die Listings verwandter Suchen jeweils eines von dem wenigstens einen Schlüsselwort und dem abgerufenen Text umfassen;
eine Datenbank (106) für verwandte Suchen, auf der die gebildeten Listings verwandter Suchen gespeichert sind, und ein invertierter Index, der eine Mehrzahl von Datenreihen umfasst, wobei jede Reihe eines von dem wenigstens einen Schlüsselwort und dem abgerufenen Text von allen den Webseiten umfasst, die dem Schlüsselwort zugeordnet sind;
einen Webserver (110) für verwandte Suchen, um die in der Datenbank (106) für verwandte Suchen gespeicherten Listings verwandter Suchen zu identifizieren, die Text aufweisen, der dem von dem Benutzer eingegebenen Suchbegriff entspricht, und der eine Ergebnisliste (314) verwandter Suchen erzeugt, die die Schlüsselworte von wenigstens einigen der identifizierten Listings verwandter Suchen umfasst, um sie dem Benutzer zusammen mit der Ergebnisliste als vorgeschlagene verwandte Suchen zu zeigen; und
Mittel zum Bereitstellen der Ergebnisliste und der Ergebnisliste verwandter Suchen an den Benutzer.

2. System nach Anspruch 1, weiter umfassend Mittel zum Aufzeichnen einer Benutzer-Auswahl eines Suchlistings von der Ergebnisliste und einen Account-Identifizierer, um dem Account des Werbetreibenden, der dem ausgewählten Listing zugeordnet ist, den Geldbetrag in Rechnung zu stellen, der dem ausgewählten Listing zugeordnet ist.

3. System nach Anspruch 1, wobei der Suchmaschinen-Webserver (108) betreibbar ist, um Webseiten zu erzeugen, um den Suchbegriff von dem Benutzer zu empfangen und die Ergebnisliste und die Ergebnisliste für verwandte Suchen dem Benutzer zu zeigen.

4. System nach Anspruch 1, wobei der Webserver (110) für verwandte Suchen betreibbar ist, um die identifizierten Listings verwandter Suchen nach Relevanz für den Suchbegriff zu sortieren.

5. System nach Anspruch 4, wobei die Ergebnisliste (314) für verwandte Suchen eine vorbestimmte Anzahl der relevantesten Schlüsselworte umfasst, die am häufigsten als Schlüsselworte in Suchlistings der Suchdatenbank (104) auftreten.

6. System nach Anspruch 1, wobei der Webserver (110) für verwandte Suchen weiter betreibbar ist, um Meta-Informationen über die von der Suchdatenbank referenzierten Webseiten zu suchen, wobei die Meta-Informationen in der verwandten Datenbank (106) gespeichert sind, um die Listings verwandter Suchen zu identifizieren, die Meta-Informationen aufweisen, die dem von dem Benutzer eingegebenen Suchbegriff entsprechen, und um die identifizierten Listings verwandter Suchen mit den Listings verwandter Suchen zu kombinieren, die Text aufweisen, der dem von dem Benutzer eingegebenen Suchbegriff entspricht.

7. Verfahren zum Erzeugen einer Suchergebnisliste, umfassend:
Speichern einer Mehrzahl von Suchlistings in einer Suchdatenbank (104), wobei jedes Listing einem Werbetreibenden zugeordnet ist, wenigstens einem Schlüsselwort, einem Geldbetrag, der dem Werbetreibenden in Rechnung zu stellen ist, wenn das Listing von einem Benutzer aus einer Suchergebnisliste ausgewählt wird, und einem einheitlichen Quellenanzeiger (einer URL), der eine Webseite referenziert;
Bilden einer Mehrzahl von Listings verwandter Suchen unter Verwendung von Suchlistings der Suchdatenbank (104) durch Abrufen von Text von der Webseite, die von der URL jedes Suchlistings referenziert wird, wobei die Listings verwandter Suchen jeweils eines von dem wenigstens einen Schlüsselwort und dem abgerufenen Text umfassen;
Speichern der gebildeten Mehrzahl von Listings verwandter Suchen und eines invertierten Index, der eine Mehrzahl von Datenreihen umfasst, in einer Datenbank (106) für verwandte Suchen, wobei jede Reihe eines von dem wenigstens einen Schlüsselwort und dem abgerufenen Text von allen den Webseiten umfasst, die dem Schlüsselwort zugeordnet sind;
Empfangen eines von einem Benutzer eingegebenen Suchbegriffs an einem Suchmaschinen-Webserver (108);
Identifizieren von Suchlistings der Such-Datenbank (104), die ein Schlüsselwort aufweisen, das dem Suchbegriff entspricht;
Ordnen der identifizierten Suchlistings unter Verwendung der Geldbeträge für die jeweiligen identifizierten Suchlistings;
Erzeugen einer Ergebnisliste, die wenigstens einige der geordneten Listings umfasst;
Identifizieren, an einem Webserver (110) für verwandte Suchen, von Listings verwandter Suchen, die in der Datenbank (106) für verwandte Suchen gespeichert sind, die Text aufweisen, welcher dem von dem Benutzer eingegebenen Suchbegriff entspricht;
Erzeugen einer Ergebnisliste (314) für verwandte Suchen, umfassend die Schlüsselworte von wenigstens einigen der identifizierten Listings verwandter Suchen als vorgeschlagene verwandte Suchen; und
Bereitstellen der Ergebnisliste und der Ergebnisliste für verwandte Suchen an den Benutzer.

8. Verfahren nach Anspruch 7, weiter umfassend:
Aufzeichnen einer Benutzer-Auswahl eines Suchlistings aus der Ergebnisliste und eines Account-Identifizierers;
In-Rechnung-Stellen des Geldbetrags, der dem ausgewählten Listing zugeordnet ist, einem Account des dem ausgewählten Listing zugeordneten Werbetreibenden.

9. Verfahren nach Anspruch 7, weiter umfassend ein Erzeugen von Webseiten, um den Suchbegriff von dem Benutzer zu empfangen und um die Ergebnisliste und die Ergebnisliste für verwandte Suchen dem Benutzer zu zeigen.

10. Verfahren nach Anspruch 7, weiter umfassend ein Sortieren der identifizierten Listings verwandter Suchen nach Relevanz für den Suchbegriff.

11. Verfahren nach Anspruch 10, wobei die Ergebnisliste (314) für verwandte Suchen eine vorbestimmte Anzahl der relevantesten Schlüsselworte umfasst, die am häufigsten als Schlüsselworte in Suchlistings der Such-Datenbank (104) auftreten.

12. Verfahren nach Anspruch 7, weiter umfassend:
Suchen von Meta-Informationen über die von der Suchdatenbank (402) referenzierten Webseiten, wobei die Meta-Informationen in der verwandten Datenbank (106) gespeichert sind;
Identifizieren von Listings verwandter Suchen, die Meta-Informationen aufweisen, welche dem von dem Benutzer eingegebenen Suchbegriff entsprechen und
Kombinieren der identifizierten Listings verwandter Suchen mit den Listings verwandter Suchen, die Text aufweisen, der dem von dem Benutzer eingegebenen Suchbegriff entspricht.

## Revendications

1. Système (100) de recherche de base de données comprenant :
une base de données (104) de recherche dans laquelle sont stockées une pluralité de listages de recherche, chaque listage étant associé à un annonceur, au moins un mot clé, un montant à facturer à l'annonceur lorsque le listage est sélectionné par un utilisateur à partir d'une liste de résultats de recherche, et une Adresse Universelle (URL) se rapportant à une page web ;
un serveur web (108) de moteurs de recherche destiné à recevoir un terme de recherche introduit par un utilisateur et à identifier des listages de recherche de la base de données (104) de recherche ayant un mot clé qui correspond au terme de recherche, à commander les listages de recherche identifiés en utilisant les montants pour les listages de recherche identifiés respectifs, et à générer une liste de résultats comportant au moins une partie des listages commandés ;
un moyen destiné à former des listages de recherche connexes en utilisant des listages de recherche de la base de données (104) de recherche en récupérant un texte de la page web référencée par l'URL de chaque listage de recherche, les listages de recherche connexes comportant chacun l'un dudit au moins un mot clé et dudit texte récupéré ;
une base de données (106) de recherches connexe dans laquelle sont stockés lesdits listages de recherches connexes formés, et un indice inversé comportant une pluralité de lignes de données, chaque ligne comportant l'un dudit au moins un mot clé et dudit texte récupéré de l'ensemble des pages web associées au mot clé ;
un serveur web (110) de recherches connexes destiné à identifier des listages de recherches connexes stockés dans ladite base de données (106) de recherches connexe, ayant un texte qui correspond au terme de recherche introduit par l'utilisateur et produisant une liste (314) de résultats de recherches connexes comprenant les mots clés d'au moins une partie des listages de recherches connexes identifiés pour les présenter à l'utilisateur tels que suggéré, recherches connexes avec la liste des résultats ; et
un moyen destiné à fournir à l'utilisateur la liste des résultats et la liste des résultats des recherches connexes.

2. Système de la revendication 1, comprenant en plus un moyen destiné à enregistrer une sélection faite par l'utilisateur d'un listage de recherche à partir de la liste des résultats et un identificateur de compte destiné à facturer le montant associé au listage sélectionné à un compte de l'annonceur associé au listage sélectionné.

3. Système de la revendication 1, dans lequel le serveur web (108) de moteurs de recherche peut fonctionner pour générer des pages web afin de recevoir le terme de recherche de l'utilisateur et de présenter à l'utilisateur la liste des résultats et la liste des résultats de recherches connexes.

4. Système de la revendication 1, dans lequel le serveur web (110) de recherches connexes peut fonctionner pour trier les listages de recherches connexes identifiés par pertinence par rapport au terme de recherche.

5. Système de la revendication 4, dans lequel la liste (314) des résultats de recherches connexes comprend un nombre prédéterminé des mots clés les plus pertinents qui apparaissent le plus souvent comme étant des mots clés dans des listages de recherche de la base de données (104) de recherche.

6. Système de la revendication 1, dans lequel le serveur web (110) de recherches connexes peut en outre fonctionner pour chercher des méta-informations concernant les pages web référencées par la base de données de recherche, les méta-informations étant stockées dans la base de données connexe (106), afin d'identifier des listages de recherches connexes ayant des méta-informations qui correspondent au terme de recherche introduit par l'utilisateur et de combiner les listages de recherches connexes identifiés avec les listages de recherches connexes ayant un texte qui correspond au terme de recherche introduit par l'utilisateur.

7. Procédé destiné à générer une liste de résultats de recherche, comprenant le fait de:
stocker, dans une base de données (104) de recherche, une pluralité de listages de recherche, chaque listage étant associé à un annonceur, au moins un mot clé, un montant à facturer à l'annonceur lorsque le listage est sélectionné par un utilisateur à partir d'une liste de résultats de recherche, et une Adresse Universelle (URL) se rapportant à une page web;
former une pluralité de listages de recherches connexes en utilisant des listages de recherche de la base de données (104) de recherche en récupérant un texte de la page web référencée par l'URL de chaque listage de recherche, les listages de recherches connexes comportant chacun l'un au moins un dudit mot clé et dudit texte récupéré;
stocker, dans une base de données (106) de recherches connexe, ladite pluralité de listages de recherches connexes formés et un indice inversé comportant une pluralité de lignes de données, chaque ligne comportant l'un dudit au moins un mot clé et dudit texte récupéré de l'ensemble des pages web associées au mot clé;
recevoir, au niveau d'un serveur web (108) de moteurs de recherche, un terme de recherche introduit par un utilisateur;
identifier des listages de recherche de la base de données (104) de recherche ayant un mot clé qui correspond au terme de recherche;
commander les listages de recherche identifiés en utilisant les montants pour les listages de recherche identifiés respectifs;
générer une liste de résultats comportant au moins une partie des listages commandés;
identifier, au niveau d'un serveur web (110) de recherches connexe, des listages de recherches connexes stockés dans ladite base de données (106) de recherches connexe ayant un texte qui correspond au terme de recherche introduit par l'utilisateur;
produire une liste de résultats (314) de recherches connexe comprenant les mots clés d'au moins une partie des listages de recherches connexes identifiés tels que suggéré, recherches connexes; et
fournir à l'utilisateur la liste des résultats et la liste des résultats des recherches connexes.

8. Procédé de la revendication 7 comprenant en plus le fait de:
enregistrer une sélection faite par l'utilisateur d'un listage de recherche à partir de la liste des résultats et d'un identificateur de compte;
facturer le montant associé au listage sélectionné à un compte de l'annonceur associé au listage sélectionné.

9. Procédé de la revendication 7 comprenant en plus le fait de générer des pages web pour recevoir le terme de recherche de l'utilisateur et pour présenter à l'utilisateur la liste des résultats et la liste des résultats de recherches connexes.

10. Procédé de la revendication 7 comprenant en plus le fait de stocker des listages des recherches connexes identifiés par pertinence par rapport au terme de recherche.

11. Procédé de la revendication 10 dans lequel la liste des résultats (314) de recherches connexes comprend un nombre prédéterminé des mots clés les plus pertinents qui apparaissent le plus souvent comme mots clés dans des listages de recherche de la base de données (104) de recherche.

12. Procédé de la revendication 7 comprenant en plus le fait de:
chercher des méta-informations concernant les pages web indiquées par la base de données (402) de recherche, les méta-informations étant stockées dans la base de données connexe (106);
identifier des listages de recherches connexes ayant des méta-informations qui correspondent au terme de recherche introduit par l'utilisateur; et
combiner les listages de recherches connexes identifiés avec les listages de recherches connexes ayant un texte qui correspond au terme de recherche introduit par l'utilisateur.
